# EUROPEAN PATENT APPLICATION

(11) **EP 4 637 255 A1**
(43) Date of publication of application: **22.10.2025**
(21) Application number: 24847743.2
(22) Date of filing: 31.05.2024
(51) Int. Cl.: H04W 76/00

(54) **BEAM TRAINING METHOD, COMMUNICATION NODE, AND STORAGE MEDIUM**

(30) Priority: 31.07.2023 CN 202310962083
(71) Applicant: ZTE Corporation, Shenzhen, Guangdong 518057 (CN)
(72) Inventor: MIAO, Ting, Shenzhen, Guangdong 518057 (CN); LU, Youxiong, Shenzhen, Guangdong 518057 (CN); XING, Weimin, Shenzhen, Guangdong 518057 (CN); BI, Feng, Shenzhen, Guangdong 518057 (CN); HE, Haigang, Shenzhen, Guangdong 518057 (CN); CHEN, Jie, Shenzhen, Guangdong 518057 (CN)
(74) Representative: Aipex B.V.
(86) International application number: PCT/CN2024/096595
(87) International publication number: WO 2025/025780

(57) **Abstract**

Provided are a beam training method, a communication node, and a storage medium. The beam training method includes sending an RS and identification information for beam training, where the identification information includes at least one of a first identifier, a second identifier, or a third identifier; the first identifier includes a default target identifier used by initial signaling for establishing a unicast link and/or an identifier of a peer communication device, the second identifier includes a source identifier used by the initial signaling for establishing the unicast link and/or a source identifier associated with a unicast link of the first communication node, and the third identifier is an identifier used for the beam training; and receiving a first beam report, sending first sidelink information, and receiving second sidelink information, where the first beam report is used for indicating a first transmitting beam for the first communication node; or receiving third sidelink information and sending fourth sidelink information.

## Description

### TECHNICAL FIELD

The present application relates to the field of communications, for example, a beam training method, a communication node, and a storage medium.

### BACKGROUND

Sidelink (SL) communication can operate in a millimeter wave frequency band, such as a frequency range 2 (FR 2). Since a wavelength in the millimeter wave frequency band is short and is subject to high propagation loss, the introduction of a beam can overcome a path loss brought by high-frequency transmission and increase the coverage of the SL communication. The 3rd Generation Partnership Project (3GPP) has established a project for beam management of SL unicast communication. For beam-based SL communication, beam measurement and beam feedback (that is, beam training) are often required so that a transmitting user equipment (UE) and a receiving UE can determine a beam for communication and then use the determined beam for subsequent data transmission between UEs. The transmitting UE may send a reference signal (RS) of the beam training before, during, or after the establishment of a unicast link. One or more receiving UEs perform beam measurement and determine a transmitting beam for the transmitting UE (that is, determining a transmitting beam that the transmitting UE may use when sending SL data to the one or more receiving UEs) and one or more receiving beams for the one or more receiving UEs. Moreover, the one or more receiving UEs may further determine one or more transmitting beams for the one or more receiving UEs (that is, determining one or more transmitting beams that the one or more receiving UEs may use when sending SL data to the transmitting UE). Subsequently, the one or more receiving UEs report the determined transmitting beam for the transmitting UE to the transmitting UE. The one or more beams determined by the one or more receiving UEs are used for subsequent SL communication between the transmitting UE and the one or more receiving UEs. Assuming that a target UE for the beam training performed by the transmitting UE is not determined, the transmitting UE would not be aware of how many receiving UEs or which receiving UE that would perform beam reporting. Typically, resources used by a receiving UE for the beam reporting are associated with a transmitting beam selected by the receiving UE for the transmitting UE, so that the transmitting UE may implicitly determine, according to the resources of the beam reporting, the transmitting beam selected by the receiving UE for the transmitting UE. However, the transmitting UE is not aware of the correspondence between the transmitting beams for the transmitting UE and the receiving UEs, which may affect subsequent beam-based SL communication between the transmitting UE and the receiving UEs. Therefore, how to associate the beam training with the subsequent SL communication is an urgent problem to be solved.

### SUMMARY

An embodiment of the present application provides a beam training method. The method is applied by a first communication node and includes the following.

A reference signal (RS) and identification information for beam training are sent, where the identification information includes at least one of a first identifier, a second identifier, or a third identifier; the first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

A first beam report is received, first sidelink information is sent, and second sidelink information is received, where the first beam report is used for indicating a first transmitting beam for the first communication node; or third sidelink information is received, and fourth sidelink information is sent.

An embodiment of the present application provides a beam training method. The method is applied by a second communication node and includes the following.

A reference signal (RS) and identification information for beam training that are sent from a first communication node are received, where the identification information includes at least one of a first identifier, a second identifier, or a third identifier; the first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

A first beam report is sent, first sidelink information is received, and second sidelink information is sent, where the first beam report is used for indicating a first transmitting beam for the first communication node; or third sidelink information is sent, and fourth sidelink information is received.

An embodiment of the present application provides a communication node. The communication node includes a processor. The processor is configured to perform the beam training method of any preceding embodiment when executing a computer program.

An embodiment of the present application further provides a computer-readable storage medium storing a computer program that, when executed by a processor, is configured to cause the processor to perform the beam training method of any preceding embodiment.

### BRIEF DESCRIPTION OF DRAWINGS

FIG. 1 is a networking diagram of an SL communication system according to an embodiment.
FIG. 2 is a flowchart of a beam training method according to an embodiment.
FIG. 3 is another flowchart of a beam training method according to an embodiment.
FIG. 4 is an interactive diagram of a beam training method shown in example 1 according to an embodiment.
FIG. 5 is an interactive diagram of a beam training method shown in example 2 according to an embodiment.
FIG. 6 is an interactive diagram of a beam training method shown in example 3 according to an embodiment.
FIG. 7 is an interactive diagram of a beam training method shown in example 4 according to an embodiment.
FIG. 8 is an interactive diagram of a beam training method shown in example 5 according to an embodiment.
FIG. 9 is an interactive diagram of a beam training method shown in example 6 according to an embodiment.
FIG. 10 is a diagram illustrating the structure of a beam training apparatus according to an embodiment.
FIG. 11 is another diagram illustrating the structure of a beam training apparatus according to an embodiment.
FIG. 12 is a diagram illustrating the structure of a UE according to an embodiment.

### DETAILED DESCRIPTION

It is to be understood that embodiments described herein are intended to explain the present application. The embodiments of the present application are described hereinafter in detail in conjunction with the drawings.

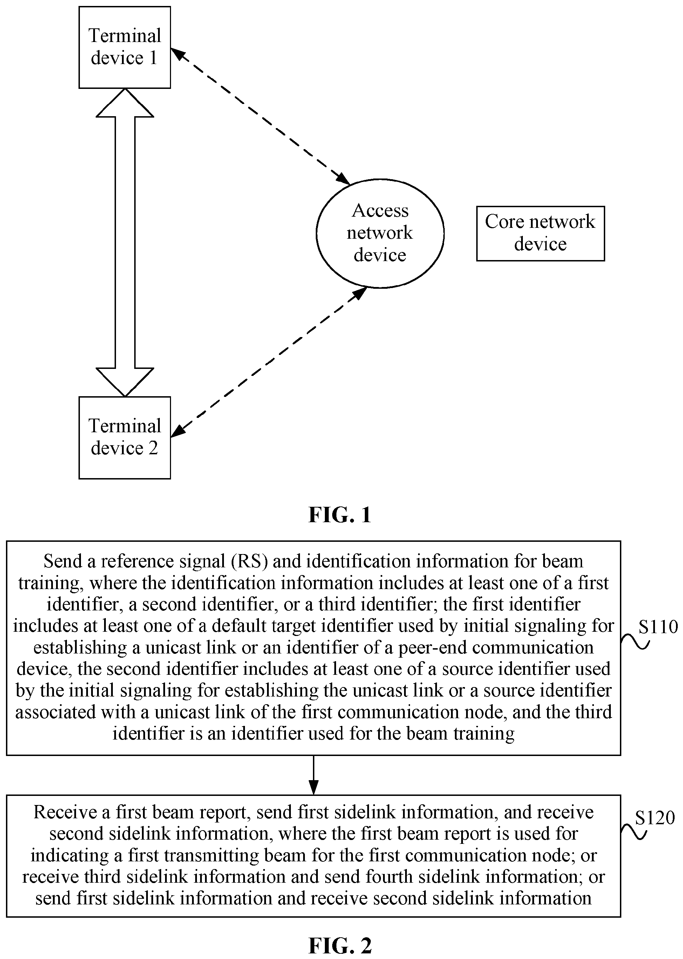

FIG. 1 is a networking diagram of an SL communication system according to an embodiment. As shown in FIG. 1, in the SL communication system (including a communication system such as vehicle-to-everything (V2X) or Device-to-Device (D2D)), when there is a service transmission between terminal devices, service data between the terminal devices may not be forwarded by a network side, that is, not forwarded by a cellular link between a terminal device and an access network device, but may be directly transmitted from a source terminal device to a target terminal device through an SL. For short-distance communication users who can apply SL communication, the SL communication not only saves wireless spectrum resources, but also reduces the data transmission pressure of a core network, thereby reducing system resource occupation, improving the spectral efficiency of a cellular communication system, reducing communication latency, and reducing network operating costs.

In the SL communication, there are typically two modes for resource allocation: mode one and mode two. In mode one, a UE determines SL transmission resources based on the scheduling of a base station. In mode two, the UE autonomously selects resources in a resource pool configured or pre-configured by a network according to resource selection strategies. The resource selection strategies mainly include sensing mechanism, partial sensing mechanism, and random selection mechanism. The SL communication has multiple communication modes or multiple cast types: unicast, multicast, and broadcast. For the unicast, only one UE is specified as a receiving end. For the multicast, only a group of UEs is specified as a receiving end. For the broadcast, any UE may be a receiving end. Each UE has one or more source identifiers and one or more target identifiers. A source identifier of each UE is always allocated by each UE, or configured or pre-configured by the network. A target identifier of each UE is related to a communication mode. Target identifiers of each UE corresponding to different communication modes are determined using different methods. For unicast communication, the source identifier of each UE may be updated, and the target identifier of each UE depends on a peer communication device of each UE.

In the SL communication, the unicast link establishment process is used for establishing a unicast link between two UEs or establishing multiple unicast links. A UE that sends a request message (such as a Direct Communication Request (DCR), that is, initial signaling for establishing a unicast link) is referred to as an initiating UE, and the other UEs are referred to as target UEs. If the DCR indicates information of a target UE (that is, the DCR is sent in a unicast manner), the unicast link establishment process is used for establishing a unicast link between the initiating UE and the target UE. If the DCR does not indicate information of a target UE (that is, the DCR is sent in a broadcast manner), and multiple target UEs are interested in a sidelink service indicated by the DCR (such as a V2X service), the initiating UE should process response messages received from the multiple target UEs to establish unicast links with the multiple target UEs separately.

Each unicast link is associated with one source identifier and one target identifier that are used for identifying a source and target of a unicast transmission. For each unicast link of a UE, a source identifier of the UE (or an identifier of the UE) is a source identifier associated with (or corresponding to) each unicast link of the UE, and a source identifier of a peer communication device of the UE (or an identifier of the peer communication device of the UE, or a target identifier of the UE) is a target identifier associated with each unicast link of the UE. For example, a peer communication device of one UE may be understood as a device with which the UE wants to establish a unicast link or has established a unicast link. For one unicast link between UE1 and UE2, when UE1 sends unicast data to UE2, corresponding source identifier and target identifier are a layer-2 identifier of UE1 and a layer-2 identifier of UE2 respectively. When UE2 sends unicast data to UE1, corresponding source identifier and target identifier are the layer-2 identifier of UE2 and the layer-2 identifier of UE1 respectively.

A beam training method provided in the present application may be applied to various wireless communication systems, for example, a long-term evolution (LTE) system, a 4th-generation (4G) system, a 5th-generation (5G) system, an LTE-5G hybrid architecture system, a 5G New Radio (NR) system, and a new communication system such as a 6th-generation (6G) system in future communication development. The beam training method is particularly applicable to SL communication systems networked based on the preceding systems, such as the SL communication system shown in FIG. 1.

A terminal device may be a wireless transceiving device that may be deployed on land (for example, being indoor or outdoor, handheld, wearable, or vehicle-mounted), deployed on the water surface (for example, a ship), or deployed in the air (for example, an aircraft, a balloon, or a satellite). The terminal device may be, for example, a UE, a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, a wireless terminal in industrial control, a wireless terminal in self-driving, a wireless terminal in remote medicine, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. The embodiments of the present application do not limit technologies and forms that are used by the terminal device. The terminal device may be referred to as a terminal.

The access network device is an access device through which the terminal device accesses a wireless communication system in a wireless manner. The access network device may include a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, and an access node in a Wireless Fidelity (Wi-Fi) system. The base station may be, for example, a macro base station, a micro base station, a home base station, a wireless remote station, a router, a Wi-Fi device, a primary-cell device, a secondary-cell device, another network-side device, or a location management function (LMF) device. The access network device may also be a module or unit for implementing some functions of the base station, for example, a central unit (CU) or a distributed unit (DU). The embodiments of the present application do not limit technologies and forms that are used by the access network device. The access network device may be referred to as a base station.

A core network device may be an access and mobility management network element or a session management network element. Exemplarily, the terminal device may access the core network through the access network device to perform data transmission.

In the embodiments of the present application, a beam training method, a communication node, and a storage medium that can operate in the preceding wireless communication systems are provided so that the transmitting UE can determine the correspondence between the transmitting beams for the transmitting UE and the receiving UEs, thereby providing technical support for the subsequent beam-based SL communication between the transmitting UE and the receiving UEs.

In the embodiments of the present application, a manner in which the communication node determines an identifier of the communication node for beam training is not limited. For example, the identifier may be provided by the network side or written in a memory card of the communication node. In addition, an identifier of each communication node for beam training may also be a source identifier of each communication node (that is, the source identifier of each communication node is the identifier of each communication node for the beam training), or an application layer identifier of each communication node. In the present application, a manner in which a first communication node acquires an identifier of a peer communication device is not limited. For example, an identifier of a peer communication device of one communication node may be a target identifier associated with a unicast link of the communication node (for example, an existing or previous unicast link), or an identifier of a peer communication device provided by a high layer of the communication node (for example, an application layer of the communication node, or a media access control (MAC) layer of the communication node), or a third identifier of a peer communication device acquired through beam measurement. The peer communication device of the communication node may be understood as a communication node other than the communication node or a target communication node of the communication node.

In the embodiments of the present application, first sidelink information may include first sidelink data. The present application does not limit information included in the first sidelink data. For example, the information may be a DCR, or a response to a first beam report sent from a second communication node, or a beam failure recovery response, or sidelink data from a high layer (for example, a protocol data unit (PDU) of a MAC layer). Second sidelink information may include second sidelink data. The present application does not limit information included in the second sidelink data. For example, the information may be sidelink data from a high layer, or a response or feedback to the first sidelink data. For example, the response may be signaling related to direct link authentication or signaling related to direct link security establishment, and the feedback may be acknowledgement (ACK/NACK) information as to whether the first sidelink data is received correctly.

In the embodiments of the present application, a manner in which identification information for beam training is transmitted is not limited. For example, the identification information may be transmitted through one or joint coding of at least two of a reference signal for the beam training, sidelink control information (SCI) corresponding to a reference signal for the beam training, a MAC control element (CE) corresponding to a reference signal for the beam training, or another channel (for example, a physical sidelink broadcast channel (PSBCH)) transmitted together with a reference signal for the beam training. Typically, there is a mapping relationship between a default target identifier used by the initial signaling for establishing the unicast link and a sidelink service type. The mapping relationship is provided by the network side or written in a memory card of an SL terminal device.

In the embodiments of the present application, a manner in which a target identifier and a source identifier that correspond to sidelink data are transmitted is not limited. Generally, the target identifier and the source identifier that correspond to the sidelink data are transmitted together with the sidelink data, for example, through SCI corresponding to the sidelink data, or through a MAC subheader corresponding to the sidelink data, or through the combination of SCI and a MAC subheader that correspond to the sidelink data.

In the embodiments of the present application, equivalent descriptions are not distinguished, that is, it is considered that the equivalent descriptions may be replaced with each other without affecting solutions of the present application. For example, an X-th piece of sidelink information includes an X-th piece of sidelink data, so it can be understood that a transmission resource of the X-th piece of sidelink data is the same as a transmission resource of the X-th piece of sidelink information, and the transmission resource of the X-th piece of sidelink data is not distinguished from the transmission resource of the X-th piece of sidelink information in the present application; a target identifier corresponding to the X-th piece of sidelink data is the same as a target identifier corresponding to the X-th piece of sidelink information, and the target identifier corresponding to the X-th piece of sidelink data is not distinguished from the target identifier corresponding to the X-th piece of sidelink information in the present application; a cast type of the X-th piece of sidelink data is the same as a cast type of the X-th piece of sidelink information, and the cast type of the X-th piece of sidelink data is not distinguished from the cast type of the X-th piece of sidelink information in the present application; a transmitting beam for the X-th piece of sidelink data is the same as a transmitting beam for the X-th piece of sidelink information, and the transmitting beam for the X-th piece of sidelink data is not distinguished from the transmitting beam for the X-th piece of sidelink information in the present application. X-th is an ordinal number, the purpose of which is to distinguish different pieces of data or information.

Through the solutions of the present application, the first communication node can determine an identifier of the second communication node and a transmitting beam that can be used by the first communication node when the first communication node sends data to the second communication node, and can also determine a receiving beam when receiving data sent from the second communication node. Moreover, the second communication node can determine an identifier of the first communication node and a receiving beam used by the second communication node when receiving the data sent from the first communication node, and can also determine a transmitting beam used by the second communication node when sending the data to the first communication node. The first communication node and the second communication node can perform subsequent communication through the beams obtained by beam training.

The beam training method, the communication node, and the technical effects thereof are described below.

FIG. 2 is a flowchart of a beam training method according to an embodiment. As shown in FIG. 2, the method provided in this embodiment is applicable to a first communication node (also referred to as a first communication node device, or a first node, or a first device). In this embodiment, a second communication node is a target communication node of the first communication node or a peer communication device of the first communication node. The method includes S110 and S120.

In S110, a reference signal (RS) and identification information for beam training are sent, where the identification information includes at least one of a first identifier, a second identifier, or a third identifier; the first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

It can be known from S110 that the identification information corresponds to a communication node that sends the identification information. For example, in identification information sent from one communication node, the identifier of the peer communication device refers to an identifier of a peer communication device of the communication node, and the source identifier associated with the unicast link refers to a source identifier associated with a unicast link of the communication node.

In S120, a first beam report is received, first sidelink information is sent, and second sidelink information is received, where the first beam report is used for indicating a first transmitting beam for the first communication node; or third sidelink information is received, and fourth sidelink information is sent; or first sidelink information is sent, and second sidelink information is received.

In an embodiment, the identification information includes at least one first identifier and at least one second identifier, and the at least one first identifier has a correspondence with the at least one second identifier.

The first sidelink information includes at least one of first sidelink data, a target identifier corresponding to first sidelink data, or a source identifier corresponding to first sidelink data. The target identifier corresponding to the first sidelink data and the source identifier corresponding to the first sidelink data are respectively a first identifier of the at least one first identifier and a second identifier of the at least one second identifier corresponding to the first identifier.

In an embodiment, the first sidelink information further includes at least one of at least one of a first identifier or a second identifier in at least one first other communication node, or a transmitting beam for at least one first other communication node, and a first other communication node is a communication node other than the first communication node. For example, if UE1 receives the reference signal and the identification information for the beam training sent by UE2 and UE3 before sending the first sidelink information, UE1 may include a measurement result (that is, the first beam report) of the reference signal sent by UE2 and UE3 in the first sidelink information. For example, the measurement result includes a second identifier of UE2, a transmitting beam determined by UE1 for UE2, a second identifier of UE3, and a transmitting beam determined by UE1 for UE3.

In an embodiment, the identification information includes at least one first identifier and the third identifier.

The first sidelink information includes at least one of a third identifier of the first communication node, first sidelink data, a target identifier corresponding to first sidelink data, or a source identifier corresponding to first sidelink data; the target identifier corresponding to the first sidelink data is a first identifier of the at least one first identifier; the source identifier corresponding to the first sidelink data includes at least one of an identifier assigned by the first communication node, an identifier configured or pre-configured through a network, or a source identifier of a unicast link same as the unicast link of the first communication node associated with the first identifier.

In an embodiment, the second sidelink information includes a second beam report, and the second beam report includes a second transmitting beam for the first communication node; or a transmission resource of the second sidelink information is associated with a transmission resource of the first sidelink information.

In an embodiment, a transmission resource of the first sidelink information is associated with at least one of a transmission resource of the first beam report or the RS.

In an embodiment, the first communication node receives the second sidelink information only when the target identifier corresponding to the first sidelink data is the default target identifier used by the initial signaling for establishing the unicast link. Otherwise, the first communication node does not need to receive the second sidelink information (that is, S120 does not include "receiving the second sidelink information").

In an embodiment, the identification information includes at least one first identifier and the third identifier, or the identification information includes the third identifier.

The first sidelink information includes a fifth beam report, the fifth beam report includes at least one of a third identifier of the first communication node, a third identifier of at least one first other communication node, or a transmitting beam for at least one first other communication node, and a first other communication node is a communication node other than the first communication node.

The first beam report further includes at least one of the third identifier of the first communication node or a third identifier of the second communication node. For example, an other communication node measures the reference signal for the beam training sent from the first communication node, sends the first beam report to the first communication node, and includes a third identifier of the other communication node in the first beam report, that is, the second communication node herein refers to a communication node that sends the first beam report.

The second sidelink information includes a second beam report, and the second beam report includes at least one of a second transmitting beam for the first communication node or a third identifier of a second communication node. For example, after receiving the first sidelink information sent from the first communication node, an other communication node sends the second sidelink information (including the second beam report) to the first communication node and includes a third identifier of the other communication node in the second beam report, that is, the second communication node herein refers to a communication node that sends the second sidelink information.

In an embodiment, the third sidelink information includes a third beam report, the third beam report includes at least one of a third identifier of a second communication node, a third identifier of at least one second other communication node, or a transmitting beam for at least one second other communication node, and a second other communication node is a communication node other than the second communication node. For example, one communication node measures the reference signal for the beam training sent from at least one other communication node and determines a transmitting beam for the at least one other communication node, and then the communication node sends the third sidelink information (including the third beam report) and includes a third identifier of the communication node, a third identifier of the at least one other communication node, and a transmitting beam for the at least one other communication node in the third beam report. In an example, the at least one other communication node includes the first communication node. That is, the second communication node herein refers to a communication node that sends the third sidelink information.

The fourth sidelink information includes a fourth beam report, and the fourth beam report includes at least one of a third identifier of the first communication node or a transmitting beam for the second communication node. For example, the second communication node refers to a target communication node of the fourth sidelink information, or if the fourth sidelink information includes a response to the third sidelink information, the second communication node refers to a communication node that sends the third sidelink information.

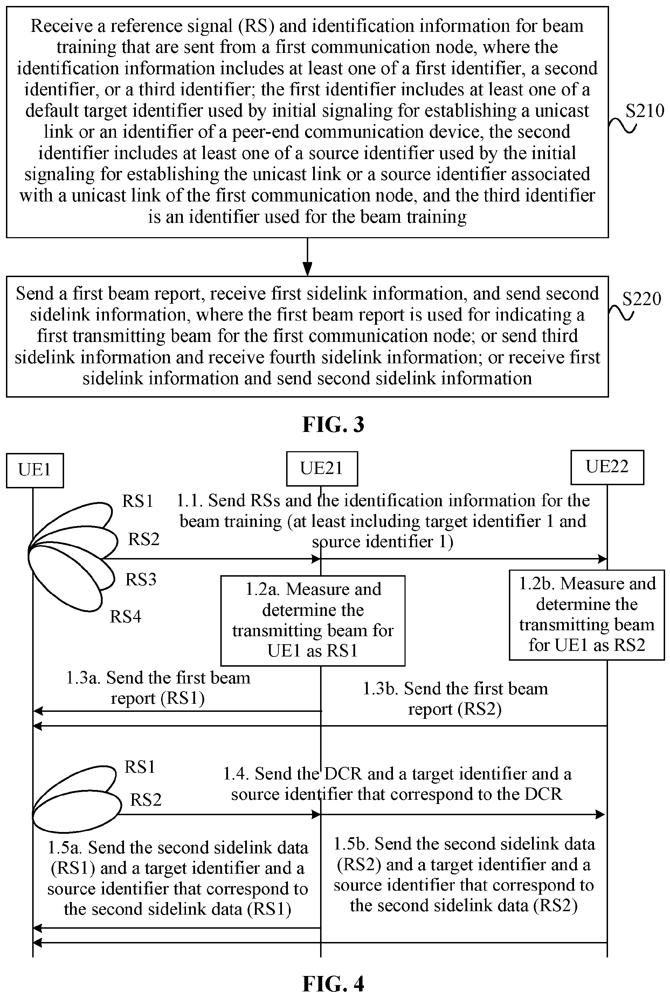

FIG. 3 is another flowchart of a beam training method according to an embodiment. As shown in FIG. 3, the method provided in this embodiment is applicable to a second communication node (also referred to as a second communication node device, or a second node, or a second device). In this embodiment, a first communication node is a target communication node of the second communication node or a peer communication device of the second communication node. The method includes S210 and S220.

In S210, a reference signal (RS) and identification information for beam training that are sent from a first communication node are received, where the identification information includes at least one of a first identifier, a second identifier, or a third identifier; the first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

It can be known from S210 that the identification information corresponds to a communication node that sends the identification information. For example, in identification information sent from one communication node, the identifier of the peer communication device refers to an identifier of a peer communication device of the communication node, and the source identifier associated with the unicast link refers to a source identifier associated with a unicast link of the communication node.

In an embodiment, the second communication node determines, according to the identification information for the beam training sent from the first communication node, whether to perform beam measurement based on the RS for the beam training sent from the first communication node. For example, if at least one first identifier included in the identification information for the beam training includes an identifier related to the second communication node, or at least one first identifier and at least one second identifier that are included in the identification information for the beam training include a first identifier and a second identifier that respectively have equal correspondences with a source identifier and a target identifier that are associated with a unicast link of the second communication node, the second communication node performs the beam measurement based on the RS for the beam training sent from the first communication node. The identifier related to the second communication node includes one of an identifier corresponding to a sidelink service type which the second communication node is interested in, an identifier of the second communication node, or a source identifier of the unicast link of the second communication node.

In an embodiment, whether the second communication node performs the beam measurement based on the RS for the beam training sent from the first communication node depends on the implementation of the second communication node.

In an embodiment, the second communication node receives the reference signal (RS) and the identification information for the beam training sent from at least one first communication node and measures the reference signal for the beam training sent from the at least one first communication node.

In S220, a first beam report is sent, first sidelink information is received, and second sidelink information is sent, where the first beam report is used for indicating a first transmitting beam for the first communication node; or third sidelink information is sent, and fourth sidelink information is received; or first sidelink information is received, and second sidelink information is sent.

In an embodiment, the identification information includes at least one first identifier and at least one second identifier, and the at least one first identifier has a correspondence with the at least one second identifier.

The first sidelink information includes at least one of first sidelink data, a target identifier corresponding to first sidelink data, or a source identifier corresponding to first sidelink data. The target identifier corresponding to the first sidelink data and the source identifier corresponding to the first sidelink data are respectively a first identifier of the at least one first identifier and a second identifier of the at least one second identifier corresponding to the first identifier.

In an embodiment, the first sidelink information further includes at least one of at least one of a first identifier or a second identifier in at least one first other communication node, or a transmitting beam for at least one first other communication node, and a first other communication node is a communication node other than the first communication node.

In an embodiment, the identification information includes at least one first identifier and the third identifier.

The first sidelink information includes at least one of a third identifier of the first communication node, first sidelink data, a target identifier corresponding to first sidelink data, or a source identifier corresponding to first sidelink data; the target identifier corresponding to the first sidelink data is a first identifier of the at least one first identifier; the source identifier corresponding to the first sidelink data includes at least one of an identifier assigned by the first communication node, an identifier configured or pre-configured through a network, or a source identifier of a unicast link same as the unicast link of the first communication node associated with the first identifier.

In an embodiment, the second sidelink information includes a second beam report, and the second beam report includes a second transmitting beam for the first communication node; or a transmission resource of the second sidelink information is associated with a transmission resource of the first sidelink information.

In an embodiment, a transmission resource of the first sidelink information is associated with at least one of a transmission resource of the first beam report or the RS.

In an embodiment, the second communication node sends the second sidelink information only when the target identifier corresponding to the first sidelink data is the default target identifier used by the initial signaling for establishing the unicast link. Otherwise, the second communication node does not send the second sidelink information (that is, S220 does not include "sending the second sidelink information").

In an embodiment, the identification information includes at least one first identifier and the third identifier, or the identification information includes the third identifier.

The first sidelink information includes a fifth beam report, the fifth beam report includes at least one of a third identifier of the first communication node, a third identifier of at least one first other communication node, or a transmitting beam for at least one first other communication node, and a first other communication node is a communication node other than the first communication node.

The first beam report further includes at least one of the third identifier of the first communication node or a third identifier of the second communication node.

The second sidelink information includes a second beam report, and the second beam report includes at least one of a second transmitting beam for the first communication node or a third identifier of a second communication node.

In an embodiment, the third sidelink information includes a third beam report, the third beam report includes at least one of a third identifier of a second communication node, a third identifier of at least one second other communication node, or a transmitting beam for at least one second other communication node, and a second other communication node is a communication node other than the second communication node. For example, the second communication node measures the reference signal for the beam training sent from at least one other communication node and determines a transmitting beam for the at least one other communication node, and then the second communication node sends the third sidelink information (including the third beam report) and includes the third identifier of the second communication node, a third identifier of the at least one other communication node, and a transmitting beam for the at least one other communication node in the third beam report. In an example, the at least one other communication node includes at least one first communication node.

The fourth sidelink information includes a fourth beam report, and the fourth beam report includes at least one of a third identifier of the first communication node or a transmitting beam for the second communication node.

Some specific examples are provided below to describe the beam training method in detail.

In example 1, assuming that the first communication node is UE1, and two second communication nodes are UE21 and UE22 respectively, the identification information for the beam training sent from UE1 includes the default target identifier used by the initial signaling for establishing the unicast link (that is, the first identifier) and the source identifier used by the initial signaling for establishing the unicast link (that is, an identifier of UE1 or the second identifier). FIG. 4 is an interactive diagram of a beam training method shown in example 1 according to an embodiment. As shown in FIG. 4, the beam training method includes the following.

1.1. UE1 sends both reference signals for the beam training and the identification information for the beam training.

Different reference signals correspond to different transmitting beams for UE1 (for example, UE1 has a total of four beam directions corresponding to RS1 to RS4 respectively). Typically, UE1 sends the reference signals periodically or semi-statically. The present application does not limit the time domain characteristics of the reference signals. The identification information for the beam training includes target identifier 1 and source identifier 1. Target identifier 1 is the default target identifier used by the initial signaling for establishing the unicast link, and source identifier 1 is the source identifier used by the initial signaling for establishing the unicast link.

1.2. UEs (such as UE21 and UE22) interested in the sidelink service type corresponding to target identifier 1 perform beam measurement based on the reference signals for the beam training sent from UE1 and determine beam information according to a measurement result of UE21 and a measurement result of UE22.

The beam information includes the transmitting beams for UE1 and may further include at least one of a receiving beam for each of UE21 and UE22 or a transmitting beam for each of UE21 and UE22 when sending information to the UE1. During device implementation, it may be considered that the measurement results of the UEs interested in the sidelink service type corresponding to target identifier 1 are associated with source identifier 1 or are associated with target identifier 1 and source identifier 1. For example, the measurement results include the reference signals sent from UE1 and values of measurement amounts (such as Reference Signal Received Powers (RSRP)) corresponding to the reference signals. UE21 measures reference signals sent from UE1, acquires RSRPs corresponding to the reference signals, and selects a beam corresponding to a reference signal with the largest RSRP value as a transmitting beam for UE1 (that is, RS1). Alternatively, UE21 may also select a reference signal from reference signals whose RSRP values exceed the threshold and use a beam corresponding to the selected reference signal as a transmitting beam for UE1. UE22 uses a similar method to determine a transmitting beam for UE1 (that is, RS2). In addition, multiple UEs interested in the sidelink service type corresponding to target identifier 1 may determine the same transmitting beam for UE1. For example, a transmitting beam determined by UE23 for UE1 is also RS1.

1.3. The UEs (that is, UE21 and UE22) interested in the sidelink service type corresponding to target identifier 1 notify UE1 of the determined transmitting beams for UE1, that is, send beam reports to UE1. For example, UE21 and UE22 send the beam reports (that is, first beam reports) to UE1 separately.

The beam reports are used for indicating the transmitting beams determined by UE21 and UE22 for UE1. Typically, beam report resources are associated with the transmitting beams (or the reference signals) for UE1. Different transmitting beams for UE1 correspond to different beam report resources. UE21 sends a signal on a beam report resource corresponding to RS1. After receiving the signal, UE1 knows that in the direction of RS1, there is a UE interested in the sidelink service type corresponding to target identifier 1. Similarly, UE22 sends a signal sequence on a beam report resource corresponding to RS2. After receiving the signal sequence, UE1 knows that in the direction of RS2, there is also a UE interested in the sidelink service type corresponding to target identifier 1. In addition, the transmitting beam determined by UE23 for UE1 is also RS1, UE23 also sends a beam report to UE1, and UE21 and UE23 may use the same beam report resource (that is, the beam report resource corresponding to RS1) to send the beam reports (for example, the same time-frequency resource, the same signal, or the same sequence). When detecting a beam report on the report resource corresponding to RS1, UE1 considers that a UE sends the beam report in the beam direction of RS1, but does not know which UE sent the beam report or UEs sent beam reports. When detecting a beam report on the report resource corresponding to RS2, UE1 considers that a UE sends the beam report in the beam direction of RS2, but does not know which UE sent the beam report or which UEs sent beam reports. The purpose of sending the beam reports to UE1 is to allow UE1 to send the first sidelink data based on the transmitting beams indicated by the beam reports (that is, RS1 and RS2), without the need to send the first sidelink data in all the four beam directions.

1.4. UE1 sends both the DCR (that is, the first sidelink data) and a target identifier and a source identifier that correspond to the DCR.

For example, UE1 receives two beam reports which indicate that the transmitting beams for UE1 are RS1 and RS2 respectively. Therefore, UE1 sends the DCR in the beam directions corresponding to RS1 and RS2 separately or uses a wide beam covering RS1 and RS2 to send the DCR. UE1 configures the target identifier corresponding to the DCR as target identifier 1 and allocates the source identifier corresponding to the DCR, or the source identifier corresponding to the DCR is configured or pre-configured through the network (in the case where the identification information for the beam training includes source identifier 1, the source identifier corresponding to the DCR needs to be the same as source identifier 1, that is, the source identifier corresponding to the DCR is configured as source identifier 1), and the target identifier and the source identifier that correspond to the DCR are sent together with the DCR.

1.5. After receiving the DCR, the UEs that want to establish unicast links with UE1 (that is, the UEs that are interested in the sidelink service type indicated by the DCR, such as UE21 and UE22) send the second sidelink data to UE1 separately and indicate the target identifier and the source identifier that correspond to the second sidelink data.

The second sidelink data at least includes transmitting beam information of UE1 (that is, the second beam report). For example, the second sidelink data may be a direct link authentication request and the transmitting beam information of UE1. The transmitting beam information of UE1 includes information of one or more transmitting beams for UE1. For UE21, a measurement result associated with UE21 is determined according to the source identifier corresponding to the DCR or the source identifier and the target identifier that correspond to the DCR, further determining transmitting beam information of UE1 (for example, the index of RS1). UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, for UE22, a measurement result associated with UE22 is determined according to the source identifier corresponding to the DCR or the source identifier and the target identifier that correspond to the DCR, further determining transmitting beam information of UE1 (for example, the index of RS2). UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. For UE23, the method is the same as that of UE21, and "UE23" may be used to replace "UE21" in the preceding example.

If the second sidelink data includes other information instead of the "direct link authentication request", the "other information" is used to replace the "direct link authentication request". For example, when the second sidelink data includes signaling related to direct link security establishment and the transmitting beam information of UE1, the "signaling related to the direct link security establishment" is used to replace the "direct link authentication request", which is not repeated in the present application.

Typically, the first beam reports do not indicate identification information of the UEs that sent the beam reports, so UE1 does not know which UE or UEs the beam directions of RS1 and RS2 correspond to. Therefore, after receiving the DCR, the UEs that sent the beam reports send the transmitting beams for UE1 to UE1 again so that UE1 associates the transmitting beams for UE1 with the communication peer ends UEs (that is, UE21 and UE22).

In another example, the second communication node may not send the first beam report. The difference from example 1 is that this example does not include operation 1.3, that is, UE21 and UE22 (possibly UE23) do not send first beam reports to UE1, and when UE1 sends the DCR in operation 1.4, the transmitting beams used depend on the implementation of UE1. For example, the DCR may be sent multiple times (or repeatedly) in multiple beam directions, or the DCR may be sent in a wide beam, which is not limited in this example. For other features of this example, reference may be made to example 1, and other features are not repeated in this example.

In example 2, assuming that the first communication node is UE1, the second communication node is UE2, and a unicast link has been established between UE1 and UE2 (or UE1 wants to establish a unicast link with UE2), the identification information for the beam training sent from UE1 includes an identifier of a communication peer end UE2 (for example, a target identifier associated with the unicast link of UE1) and the source identifier associated with the unicast link of UE1 (that is, an identifier of UE1 or the second identifier). In addition, this example is also applicable to the case where the identifier of the communication peer end UE2 is provided by a high layer of UE1, and the "target identifier associated with the unicast link of UE1" in the following description may be replaced with the "identifier provided by the high layer of UE1".

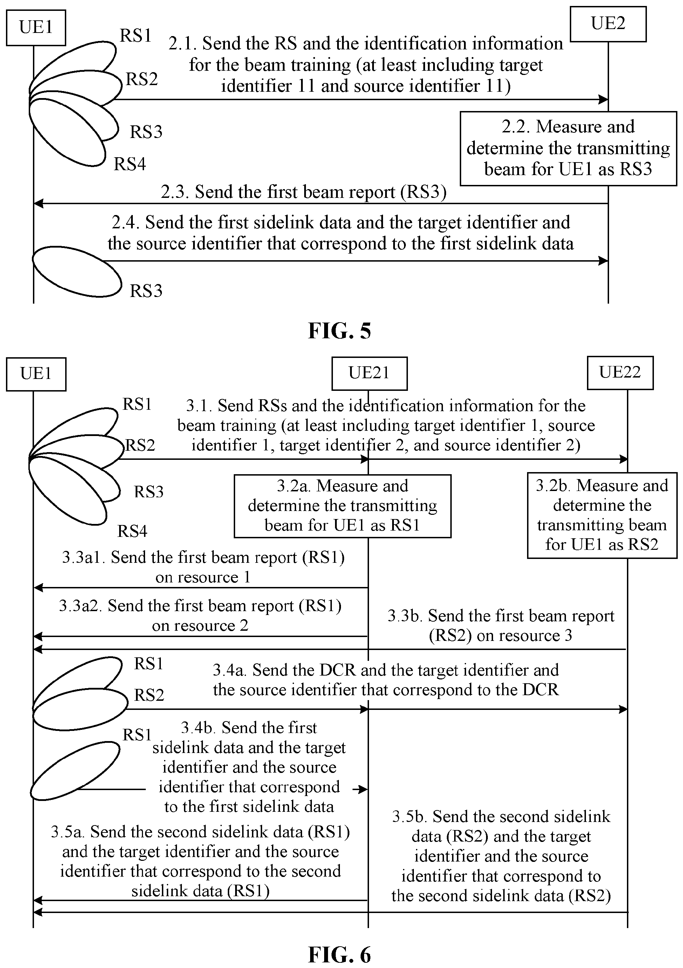

FIG. 5 is an interactive diagram of a beam training method shown in example 2 according to an embodiment. As shown in FIG. 5, the beam training method includes the following.

2.1. UE1 sends both the reference signal for the beam training and the identification information for the beam training.

For example, different reference signals correspond to different transmitting beams for UE1. The identification information for the beam training includes target identifier 11 and source identifier 11. Target identifier 11 is the target identifier associated with the unicast link of UE1 (that is, the identifier of UE2), and source identifier 11 is the source identifier associated with the unicast link of UE1 (that is, the identifier of UE1). The unicast link is the unicast link between UE1 and UE2. The main difference from the preceding example is that the target device for UE1 to perform the beam training is only UE2. The beam training in this example may also be understood as beam maintenance or new beam discovery.

2.2. According to target identifier 11 (or target identifier 11 and source identifier 11), UE2 determines that UE2 is the target device for UE1 to perform the beam training. Therefore, UE2 performs beam measurement based on the reference signal for the beam training sent from UE1 and determines beam information based on a measurement result.

For example, the beam information includes a transmitting beam for UE1 and may further include at least one of a receiving beam for UE2 or a transmitting beam for UE2 when sending information to UE1.
2.3. UE2 sends a beam report (that is, the first beam report) to UE1. The beam report is used for indicating the transmitting beam determined by UE2 for UE1 (that is, RS3).
2.4. UE1 sends both the first sidelink data and the target identifier and the source identifier that correspond to the first sidelink data.

For example, UE1 may use beam RS3 or a wide beam covering RS3 to send the first sidelink data, the target identifier corresponding to the first sidelink data is configured as target identifier 11, and the source identifier corresponding to the first sidelink data is configured as a source identifier of a unicast link same as the unicast link of UE1 associated with target identifier 11 (that is, source identifier 11).

In this example, the first sidelink data may be a response of UE1 to the beam report sent from UE2.

For example, a transmission resource of the first sidelink information is associated with a transmission resource of the beam report sent from UE2. If UE2 correctly decodes the first sidelink data on the transmission resource of the first sidelink information associated with the transmission resource of the beam report, UE2 considers that UE2 has received a response to the beam report sent from UE2.

For another example, the transmission resource of the beam report sent from UE2 is associated with the reference signal for the beam training sent from UE1 (that is, the transmitting beam for UE1), and the transmission resource of the first sidelink information is also associated with the reference signal for the beam training sent from UE1. If the transmission resource of the first sidelink information and the transmission resource of the beam report sent from UE2 are associated with the same reference signal sent from UE1, the transmission resource of the first sidelink information is after the transmission resource of the beam report sent from UE2 (for example, the transmission resource of the first sidelink information is the earliest resource after the transmission resource of the beam report sent from UE2), and UE2 correctly decodes the first sidelink data, UE2 considers that UE2 has received a response to the beam report sent from UE2.

For another example, when transmitting the first sidelink data, UE1 indicates the transmitting beam used when sending the first sidelink data. If UE2 correctly decodes the first sidelink data, and the transmitting beam used when UE1 sends the first sidelink data is the beam reported by UE2, UE2 considers that UE2 has received a response to the beam report sent from UE2.

In example 3, in combination with the preceding example 1 and example 2, the identification information for the beam training including one first identifier and one second identifier is used as an example for explanation. The identification information for the beam training may include one or more first identifiers and one or more second identifiers. In this case:
1. The first communication node sends both the reference signal for the beam training and the identification information for the beam training, where the identification information for the beam training includes one or more first identifiers and one or more second identifiers.
2. The second communication node performs beam measurement on the reference signal sent from the first communication node and determines beam information according to a measurement result, where the beam information includes a transmitting beam for UE1. For example, the second communication node determines, according to the identification information for the beam training, whether to perform the beam measurement based on the reference signal sent from UE1, and determines the beam information based on the measurement result. The beam information includes the transmitting beam for UE1 and may further include at least one of a receiving beam for the second communication node or a transmitting beam for the second communication node when sending information to UE1. During device implementation, it may be considered that the measurement result of the second communication node is associated with the second identifier or is associated with the first identifier and the second identifier. For example, if the one or more first identifiers included in the identification information for the beam training include the identifier related to the second communication node, or if the one or more first identifiers and the one or more second identifiers that are included in the identification information for the beam training include the first identifier and the second identifier that respectively have equal correspondences with the source identifier and the target identifier that are associated with the unicast link of the second communication node, the second communication node performs the beam measurement based on the reference signal sent from the first communication node, where the identifier related to the second communication node includes one of the identifier corresponding to the sidelink service type which the second communication node is interested in, the identifier of the second communication node, and the source identifier of the unicast link of the second communication node.
3. For a specific first identifier, the second communication node sends a beam report (that is, the first beam report). For example, for each reference signal of the first communication node, each first identifier corresponds to one or more beam report resources, and the second communication node sends the beam report on one or more beam report resources corresponding to at least one specific first identifier. The specific first identifier includes at least one of the following: an identifier which is the first identifier in the identification information for the beam training and also is the identifier related to the second communication node, or an identifier which is the first identifier in the identification information for the beam training, where the first identifier and the second identifier corresponding to the first identifier are respectively the source identifier and the target identifier that are associated with the unicast link of the second communication node.
4. If the specific first identifier is the default target identifier used by the initial signaling for establishing the unicast link, the first communication node and the second communication node perform an execution according to operations 1.4 and 1.5 in example 1; if the specific first identifier is the identifier of the peer communication device, the first communication node and the second communication node continue performing the execution according to operation 2.4 in example 2.

This example may be understood as a combination of multiple examples 1, or a combination of multiple examples 2, or a combination of at least one example 1 and at least one example 2. For each second communication node, a beam measurement result based on the reference signal for the beam training sent from the first communication node is applicable to all the specific first identifiers of each second communication node or to all the specific first identifiers of each second communication node and second identifiers corresponding to all the specific first identifiers.

The following description is made using an example in which the first communication node is UE1, the two second communication nodes are UE21 and UE22 respectively, the unicast link has been established between UE1 and UE21 (or UE1 wants to establish the unicast link with UE21), and the identification information for the beam training sent from UE1 includes the default target identifier used by the initial signaling for establishing the unicast link, the source identifier used by the initial signaling for establishing the unicast link, the identifier of the communication peer end UE21 (for example, the target identifier associated with the unicast link of UE1), and the source identifier associated with the unicast link of UE1 (that is, the identifier of UE1). This example is also applicable to the case where the identifier of the communication peer end UE2 is provided by the high layer of UE1, and the "target identifier associated with the unicast link of UE1" in the following description may be replaced with the "identifier provided by the high layer of UE1".

FIG. 6 is an interactive diagram of a beam training method shown in example 3 according to an embodiment. As shown in FIG. 6, the beam training method includes the following.

3.1. UE1 sends both reference signals for the beam training and the identification information for the beam training.

For example, the identification information for the beam training includes target identifier 1, source identifier 1, target identifier 2, and source identifier 2. Target identifier 1 is the default target identifier used by the initial signaling for establishing the unicast link, and source identifier 1 is the source identifier used by the initial signaling for establishing the unicast link. Target identifier 2 is the target identifier associated with the unicast link of UE1 (that is, an identifier of UE21), and source identifier 2 is the source identifier associated with the unicast link of UE1 (that is, the identifier of UE1), where the unicast link is the unicast link between UE1 and UE21.

3.2. The UEs (such as UE21 and UE22) interested in the sidelink service type corresponding to target identifier 1 or a UE whose identifier is the target identifier 2 (such as UE21) may perform beam measurement based on the reference signals for the beam training sent from UE1 and respectively determine beam information according to a measurement result of UE21 and a measurement result of UE22 or according to a measurement result of UE21.

For example, the beam information includes the transmitting beams for UE1 and may further include at least one of the receiving beam for each of UE21 and UE22 or for UE21, or a transmitting beam for each of UE21 and UE22 or for UE21 when sending information to the UE1, or may further include at least one of a receiving beam for the UE or a transmitting beam for the UE when the UE sends information to UE1. During device implementation, it may be considered that the measurement results of UE21 and UE22 are associated with the second identifier or are associated with the first identifier and the second identifier. Since target identifier 2 is the identifier of UE21 (that is, the purpose of UE1 sending a reference signal for the beam training is to allow UE21 to perform beam measurement), even if UE21 is not interested in the sidelink service type corresponding to target identifier 1, UE21 still perform the beam measurement based on the reference signal for the beam training sent from UE1.

3.3. UE21 and UE22 send the beam reports (that is, the first beam reports) to UE1 separately. The beam reports are used for indicating the transmitting beams determined by UE21 and UE22 for UE1.

For example, for each transmitting beam for UE1, different first identifiers (that is, target identifier 1 and target identifier 2) correspond to different beam report resources, that is, different transmitting beams for UE1 and different first identifiers correspond to the different beam report resources. UE21 and UE22 determine that the transmitting beams for UE1 are RS1 and RS2 respectively. For RS1, UE21 sends a signal sequence on a beam report resource corresponding to target identifier 1 (that is, resource 1) and a beam report resource corresponding to target identifier 2 (that is, resource 2) separately. After receiving the signal sequence, UE1 knows that in the direction of RS1, there is a UE interested in the sidelink service type corresponding to target identifier 1. In addition, when a target identifier and a source identifier that correspond to SL information sent from UE1 are target identifier 2 and source identifier 2 respectively, the transmitting beam corresponding to RS1 or a wide beam covering RS1 is used for sending the SL information. Similarly, for RS2, UE22 sends a signal sequence on a beam report resource corresponding to target identifier 1 (that is, resource 3). After receiving the signal sequence, UE1 knows that in the direction of RS2, there is also a UE interested in the sidelink service type corresponding to target identifier 1.

3.4. For target identifier 1, UE1 sends both the DCR (that is, the first sidelink data) and the target identifier and the source identifier that correspond to the DCR.

For example, UE1 receives the two beam reports which indicate that the transmitting beams for UE1 are RS1 and RS2 respectively. Therefore, UE1 sends the DCR in the beam directions corresponding to RS1 and RS2 separately or uses a wide beam covering RS1 and RS2 to send the DCR. UE1 configures the target identifier corresponding to the DCR as target identifier 1 and allocates the source identifier corresponding to the DCR, or the source identifier corresponding to the DCR is configured or pre-configured through the network (for example, in the case where the identification information for the beam training includes the source identifier used by the initial signaling for establishing the unicast link, the source identifier corresponding to the DCR needs to be the same as the source identifier used by the initial signaling for establishing the unicast link included in the identification information for the beam training, that is, the source identifier corresponding to the DCR is configured as source identifier 1).

For target identifier 2, UE1 sends both the first sidelink data and the target identifier and the source identifier that correspond to the first sidelink data. For example, UE1 may use beam RS3 or the wide beam covering RS3 to send the first sidelink data, the target identifier corresponding to the first sidelink data is configured as the target identifier associated with the unicast link of UE1 included in the identification information for the beam training (that is, target identifier 2), and the source identifier corresponding to the first sidelink data is configured as a source identifier of a unicast link the same as the unicast link of UE1 associated with target identifier (that is, source identifier 2). The first sidelink data may be a response of UE1 to a beam report sent from UE21. The method in example 2 may be used for determining, by replacing "UE2" in example 2 with "UE21", whether UE21 has received the response of UE1 to the beam report sent from UE21.

3.5. After receiving the DCR, the UEs that want to establish the unicast links with UE1 (that is, the UEs that are interested in the sidelink service type indicated by the DCR, such as UE21 and UE22) send the second sidelink data to UE1 separately and indicate the target identifier and the source identifier that correspond to the second sidelink data.

The second sidelink data at least includes the transmitting beam information of UE1 (that is, the second beam report). For example, the second sidelink data may be the direct link authentication request and the transmitting beam information of UE1. The transmitting beam information of UE1 includes the information of the one or more transmitting beams for UE1. For UE21, the measurement result associated with UE21 is determined according to the source identifier corresponding to the DCR or the source identifier and the target identifier that correspond to the DCR, further determining the transmitting beam information of UE1 (for example, the index of RS1). UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, for UE22, the measurement result associated with UE22 is determined according to the source identifier corresponding to the DCR or the source identifier and the target identifier that correspond to the DCR, further determining the transmitting beam information of UE1 (for example, the index of RS2). UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data.

In another example, the second communication node may not send the first beam report. The difference from example 3 is that this example does not include operation 3.3, that is, UE21 and UE22 do not send the first beam reports to UE1, and when UE1 sends the DCR in operation 3.4, the transmitting beams used depend on the implementation of UE1. For example, the DCR may be sent the multiple times (or repeatedly) in the multiple beam directions, or the DCR may be sent in the wide beam, which is not limited in this example. For other features of this example, reference may be made to example 3, and other features are not repeated in this example.

In example 4, assuming that the first communication node is UE1, and the two second communication nodes are UE21 and UE22 respectively, the identification information for the beam training sent from UE1 includes the default target identifier used by the initial signaling for establishing the unicast link (that is, the first identifier) and an identifier of UE for the beam training (that is, the third identifier).

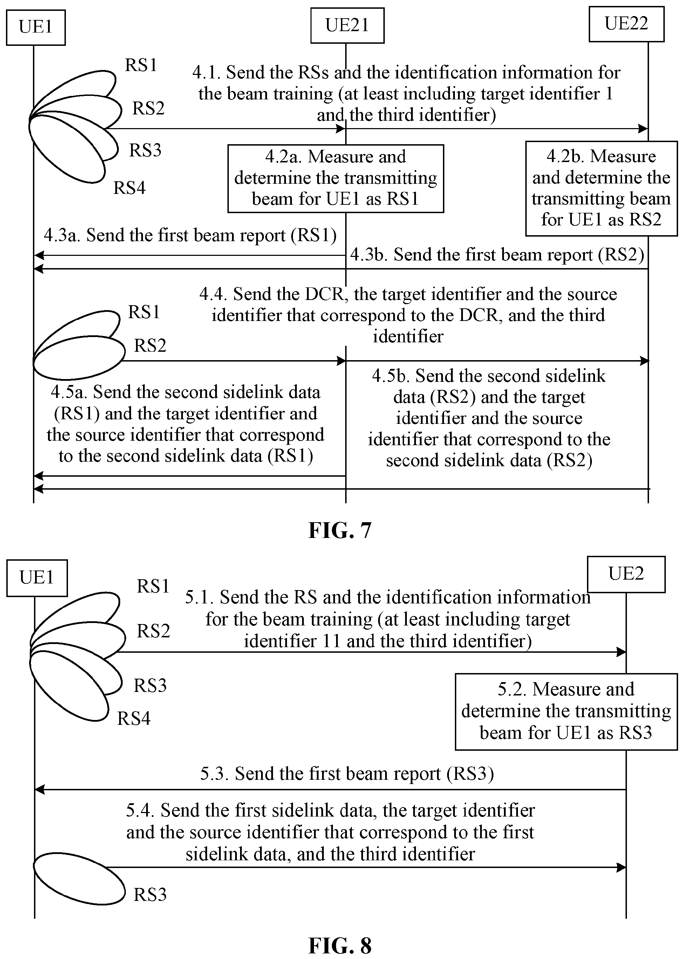

FIG. 7 is an interactive diagram of a beam training method shown in example 4 according to an embodiment. As shown in FIG. 7, a simple process of the beam training method shown in example 4 is provided. For a detailed description, reference may be made to example 1. "Source identifier 1" and the "source identifier used by the initial signaling for establishing the unicast link" in example 1 are replaced with the "third identifier" and the "identifier of UE1 for the beam training" respectively.

4.1. UE1 sends both the reference signals for the beam training and the identification information for the beam training.

For example, the different reference signals correspond to the different transmitting beams for UE1. The identification information for the beam training includes target identifier 1 and the third identifier. Target identifier 1 is the default target identifier used by the initial signaling for establishing the unicast link, and the third identifier is the identifier of UE1 for the beam training.

4.2. The UEs (such as UE21 and UE22) interested in the sidelink service type corresponding to target identifier 1 perform the beam measurement based on the reference signals for the beam training sent from UE1 and determine the beam information according to the measurement results of the UEs.

For example, the beam information includes the transmitting beams for UE1 and may further include at least one of the receiving beams for the UEs or the transmitting beams for the UEs when the UEs send the information to UE1. During device implementation, it may be considered that the measurement results of the UEs interested in the sidelink service type corresponding to target identifier 1 are associated with the third identifier of UE1 or are associated with the third identifier of UE1 and target identifier 1. The transmitting beams determined by UE21 and UE22 for UE1 are RS1 and RS2 respectively.

4.3. The UEs (such as UE21 and UE22) interested in the sidelink service type corresponding to target identifier 1 notify UE1 of the determined transmitting beams for UE1, that is, send the beam reports to UE1 (that is, the first beam reports).

4.4. UE1 sends the DCR (that is, the first sidelink data), the target identifier and the source identifier that correspond to the DCR, and the third identifier of UE1.

For example, UE1 configures the target identifier corresponding to the DCR as target identifier 1 and allocates the source identifier corresponding to the DCR, or the source identifier corresponding to the DCR is configured or pre-configured through the network.

4.5. After receiving the DCR, the UEs that want to establish the unicast links with UE1 (that is, the UEs that are interested in the sidelink service type indicated by the DCR, such as UE21 and UE22) send the second sidelink data to UE1 separately and indicate the target identifier and the source identifier that correspond to the second sidelink data. The second sidelink data at least includes the transmitting beam information of UE1 (that is, the second beam report), where the transmitting beam information of UE1 includes the information of the one or more transmitting beams for UE1.

For example, the second sidelink data may be the direct link authentication request and the transmitting beam information of UE1. For UE21, the measurement result associated with UE21 is determined according to the received third identifier of UE1 sent together with the DCR or the received third identifier of UE1 and the received target identifier corresponding to the DCR that are sent together with the DCR, further determining the transmitting beam information of UE1 (for example, the index of RS1). UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, for UE22, the measurement result associated with UE22 is determined according to the received third identifier of UE1 sent together with the DCR or the received third identifier of UE1 and the received target identifier corresponding to the DCR that are sent together with the DCR, further determining the transmitting beam information of UE1 (for example, the index of RS2). UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. For UE23, the method is the same as that of UE21, and "UE23" may be used to replace "UE21" in the preceding example.

In another example, the second communication node may not send the first beam report. The difference from example 4 is that this example does not include operation 4.3, that is, UE21 and UE22 do not send the first beam reports to UE1, and when UE1 sends the DCR in operation 4.4, the transmitting beams used depend on the implementation of UE1. For example, the DCR may be sent the multiple times (or repeatedly) in the multiple beam directions, or the DCR may be sent in the wide beam, which is not limited in this example. For other features of this example, reference may be made to example 4, and other features are not repeated in this example.

In example 5, assuming that the first communication node is UE1, the second communication node is UE2, and the unicast link has been established between UE1 and UE2 (or UE1 wants to establish the unicast link with UE2), the identification information for the beam training sent from UE1 includes the identifier of the communication peer end UE2 (for example, the target identifier associated with the unicast link of UE1) and the identifier of UE1 for the beam training (that is, the third identifier). In addition, this example is also applicable to the case where the identifier of the communication peer end UE2 is provided by the high layer of UE1, and the "target identifier associated with the unicast link of UE1" in the following description may be replaced with the "identifier provided by the high layer of UE1".

FIG. 8 is an interactive diagram of a beam training method shown in example 5 according to an embodiment. As shown in FIG. 8, a simple process of the beam training method shown in example 5 is provided. For a detailed description, reference may be made to example 2. "Source identifier 11" and the "source identifier associated with the unicast link of UE1" in example 2 are replaced with the "third identifier" and the "identifier of UE1 for the beam training" respectively.
5.1. UE1 sends both the reference signal for the beam training and the identification information for the beam training. For example, the different reference signals correspond to the different transmitting beams for UE1. The identification information for the beam training includes target identifier 11 and the third identifier. Target identifier 11 is the target identifier associated with the unicast link of UE1 (that is, the identifier of UE2), and the third identifier is the identifier of UE1 for the beam training. The unicast link is the unicast link between UE1 and UE2. The main difference from the preceding example is that the target device for UE1 to perform the beam training is only UE2. The beam training in this example may also be understood as the beam maintenance or the new beam discovery.
5.2. According to target identifier 11 (or target identifier 11 and the third identifier), UE2 determines that UE2 is the target device for UE1 to perform the beam training. Therefore, UE2 performs the beam measurement based on the reference signal for the beam training sent from UE1 and determines the beam information based on the measurement result. For example, the beam information includes the transmitting beam for UE1 (such as RS3) and may further include at least one of the receiving beam for UE2 or the transmitting beam for UE2 when UE2 sends the information to UE1.
5.3. UE2 sends the beam report (that is, the first beam report) to UE1. The beam report is used for indicating the transmitting beam determined by UE2 for UE1 (that is, RS3).
5.4. UE1 sends both the first sidelink data and the target identifier and the source identifier that correspond to the first sidelink data. Optionally, the third identifier of UE1 may also be sent at the same time. For example, the target identifier corresponding to the first sidelink data is configured as target identifier 11, and the source identifier corresponding to the first sidelink data is configured as the source identifier of the unicast link the same as the unicast link of UE1 associated with target identifier 11.

In this example, the first sidelink data may be the response of UE1 to the beam report sent from UE2.

For example, if UE2 receives the third identifier of UE1 when receiving the first sidelink data, and the third identifier of UE1 transmitted together with the first sidelink data is the same as the third identifier of UE1 in the identification information for the beam training, the first sidelink data may be used as the response to the beam report sent from UE2.In addition, UE1 may not send the third identifier. In this case, UE2 may use the method in example 2 to determine whether UE2 has received the response of UE1 to the beam report sent from UE2.

In example 6, in combination with the preceding example 4 and example 5, the identification information for the beam training including one first identifier and the third identifier is used as an example for explanation. The identification information for the beam training may include one or more first identifiers and one third identifier. In this case:
1. The first communication node sends both the reference signal for the beam training and the identification information for the beam training, where the identification information for the beam training includes the one or more first identifiers and the one third identifier.
2. The second communication node performs the beam measurement on the reference signal sent from the first communication node and determines the beam information according to the measurement result, where the beam information includes the transmitting beam for UE1. For example, the second communication node determines, according to the identification information for the beam training, whether to perform the beam measurement based on the reference signal sent from UE1, and determines the beam information based on the measurement result. The beam information includes the transmitting beam for UE1 and may further include at least one of the receiving beam for the second communication node or the transmitting beam for the second communication node when the second communication node sends information to UE1. During device implementation, it may be considered that the measurement result of the second communication node is associated with the third identifier or is associated with the first identifier and the third identifier. For example, if the one or more first identifiers included in the identification information for the beam training include the identifier related to the second communication node, or if the one or more first identifiers and the one or more second identifiers that are included in the identification information for the beam training include the first identifier and the second identifier that respectively have equal correspondences with the source identifier and the target identifier that are associated with the unicast link of the second communication node, the second communication node performs the beam measurement based on the reference signal sent from the first communication node, where the identifier related to the second communication node includes one of the identifier corresponding to the sidelink service type which the second communication node is interested in , the identifier of the second communication node, and the source identifier of the unicast link of the second communication node.
3. For the specific first identifier, the second communication node sends the beam report (that is, the first beam report). For example, for each reference signal of the first communication node, each first identifier corresponds to one or more beam report resources, and the second communication node sends the beam report on one or more beam report resources corresponding to at least one specific first identifier. The specific first identifier is the first identifier in the identification information for the beam training and the identifier related to the second communication node.
4. If the specific first identifier is the default target identifier used by the initial signaling for establishing the unicast link, the first communication node and the second communication node perform an execution according to operations 4.4 and 4.5 in example 4; if the specific first identifier is the identifier of the peer communication device, the first communication node and the second communication node continue performing the execution according to operation 5.4 in example 5.

This example may be understood as a combination of multiple examples 4, or a combination of multiple examples 5, or a combination of at least one example 4 and at least one example 5. For each second communication node, the beam measurement result based on the reference signal for the beam training sent from the first communication node is applicable to all the specific first identifiers of each second communication node.

The following description is made using an example in which the first communication node is UE1, the two second communication nodes are UE21 and UE22 respectively, the unicast link has been established between UE1 and UE21 (or UE1 wants to establish the unicast link with UE21), and the identification information for the beam training sent from UE1 includes the default target identifier used by the initial signaling for establishing the unicast link, the identifier of the communication peer end UE21 (for example, the target identifier associated with the unicast link of UE1), and the identifier of UE1 for the beam training (that is, the third identifier). This example is also applicable to the case where the identifier of the communication peer end UE2 is provided by the high layer of UE1, and the "target identifier associated with the unicast link of UE1" in the following description may be replaced with the "identifier provided by the high layer of UE1".

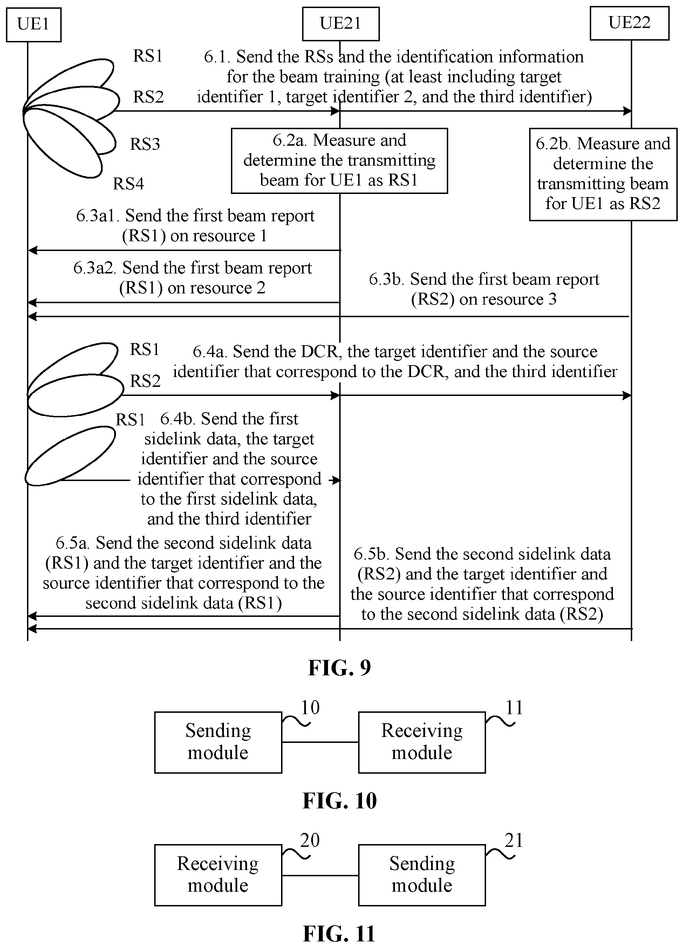

FIG. 9 is an interactive diagram of a beam training method shown in example 6 according to an embodiment. As shown in FIG. 9, the beam training method includes the following.
6.1. UE1 sends both the reference signals for the beam training and the identification information for the beam training. For example, the identification information for the beam training includes target identifier 1, target identifier 2, and the third identifier. Target identifier 1 is the default target identifier used by the initial signaling for establishing the unicast link, target identifier 2 is the target identifier associated with the unicast link of UE1 (that is, the identifier of UE21), and the third identifier is the identifier of UE1 for the beam training. The unicast link is the unicast link between UE1 and UE21.
6.2. The UEs (such as UE21 and UE22) interested in the sidelink service type corresponding to target identifier 1 or the UE whose identifier is target identifier 2 may perform the beam measurement based on the reference signals for the beam training sent from UE1 and respectively determine the beam information according to a measurement result of UE21 and a measurement result of UE22 or according to a measurement result of UE21. For example, the beam information includes the transmitting beams for UE1 and may further include at least one of the receiving beam for each of UE21 and UE22 or for UE21 or the transmitting beam for each of UE21 and UE22 or for UE21 when sending information to the UE1. During device implementation, it may be considered that the measurement results of UE21 and UE22 are associated with the third identifier or are associated with the first identifier and the third identifier. Since target identifier 2 is the identifier of UE21 (that is, the purpose of UE1 sending the reference signal for the beam training is to allow UE21 to perform the beam measurement), even if UE21 is not interested in the sidelink service type corresponding to target identifier 1, UE21 still perform the beam measurement based on the reference signal for the beam training sent from UE1.
6.3. UE21 and UE22 send the beam reports (that is, the first beam reports) to UE1 separately. The beam reports are used for indicating the transmitting beams determined by UE21 and UE22 for UE1. For example, for each transmitting beam for UE1, the different first identifiers (that is, target identifier 1 and target identifier 2) correspond to the different beam report resources, that is, the different transmitting beams for UE1 and the different first identifiers correspond to the different beam report resources. UE21 and UE22 determine that the transmitting beams for UE1 are RS1 and RS2 respectively. For RS1, UE21 sends the signal sequence on the beam report resource corresponding to target identifier 1 (that is, resource 1) and the beam report resource corresponding to target identifier 2 (that is, resource 2) separately. After receiving the signal sequence, UE1 knows that in the direction of RS1, there is the UE interested in the sidelink service type corresponding to target identifier 1. In addition, when the target identifier corresponding to the SL information sent from UE1 is target identifier 2, the transmitting beam corresponding to RS1 or the wide beam covering RS1 is used for sending the SL information. Alternatively, when the target identifier corresponding to the SL information sent from UE1 is target identifier 2, and the third identifier sent together with the SL information is the same as the third identifier of UE1 in the identification information for the beam training, the transmitting beam corresponding to RS1 or the wide beam covering RS1 is used for sending the SL information. Similarly, for RS2, UE22 sends the signal sequence on the beam report resource corresponding to target identifier 1 (that is, resource 3). After receiving the signal sequence, UE1 knows that in the direction of RS2, there is also the UE interested in the sidelink service type corresponding to target identifier 1.
6.4. For target identifier 1, UE1 sends the DCR (that is, the first sidelink data), the target identifier and the source identifier that correspond to the DCR, and the third identifier of UE1. For example, UE1 receives the two beam reports which indicate that the transmitting beams for UE1 are RS1 and RS2 respectively. Therefore, UE1 sends the DCR in the beam directions corresponding to RS1 and RS2 separately or uses the wide beam covering RS1 and RS2 to send the DCR. UE1 configures the target identifier corresponding to the DCR as target identifier 1 and allocates the source identifier corresponding to the DCR, or the source identifier corresponding to the DCR is configured or pre-configured through the network.

For target identifier 2, UE1 sends both the first sidelink data and the target identifier and the source identifier that correspond to the first sidelink data. Optionally, the third identifier of UE1 may also be sent at the same time. For example, the target identifier corresponding to the first sidelink data is configured as the target identifier associated with the unicast link of UE1 (that is, target identifier 2) included in the identification information for the beam training, and the source identifier corresponding to the first sidelink data is configured as the source identifier of the unicast link the same as the unicast link of UE1 associated with target identifier 2. The first sidelink data may be the response of UE1 to the beam report sent from UE21. The method in example 5 may be used for determining, by replacing "UE2" in example 5 with "UE21", whether UE21 has received the response of UE1 to the beam report sent from UE21.

6.5. After receiving the DCR, the UEs that want to establish the unicast links with UE1 (that is, the UEs that are interested in the sidelink service type indicated by the DCR, such as UE21 and UE22) send the second sidelink data to UE1 separately and indicate the target identifier and the source identifier that correspond to the second sidelink data. The second sidelink data at least includes the transmitting beam information of UE1. For example, the second sidelink data may be the direct link authentication request and the transmitting beam information of UE1 (that is, the second beam report). The transmitting beam information of UE1 includes the information of the one or more transmitting beams for UE1. For UE21, the measurement result associated with UE21 is determined according to the received third identifier of UE1 sent together with the DCR or the received third identifier of UE1 and the received target identifier corresponding to the DCR that are sent together with the DCR, further determining the transmitting beam information of UE1 (for example, the index of RS1). UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, for UE22, the measurement result associated with UE22 is determined according to the received third identifier of UE1 sent together with the DCR or the received third identifier of UE1 and the received target identifier corresponding to the DCR that are sent together with the DCR, further determining the transmitting beam information of UE1 (for example, the index of RS2). UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data.

In another example, the second communication node may not send the first beam report. The difference from example 6 is that this example does not include operation 6.3, that is, UE21 and UE22 do not send the first beam reports to UE1, and when UE1 sends the DCR in operation 6.4, the transmitting beams used depend on the implementation of UE1. For example, the DCR may be sent the multiple times (or repeatedly) in the multiple beam directions, or the DCR may be sent in the wide beam, which is not limited in this example. For other features of this example, reference may be made to example 6, and other features are not repeated in this example.

In example 7, this example is illustrated using an example in which the first communication node is UE1, the two second communication nodes are UE21 and UE22 respectively, and the first sidelink data is the DCR. In this example, the identification information for the beam training includes the default target identifier used by the initial signaling for establishing the unicast link, and may further include at least one of the one or more second identifiers, the third identifier, or the identifier of the peer communication device (the identifier of UE21).

This example describes a method when the target identifier corresponding to the first sidelink data is the default target identifier used by the initial signaling for establishing the unicast link. If not in collision, the method in this example may be used for replacing operation 1.5 in example 1, or operation 3.5 in example 3, or operation 4.5 in example 4, or operation 6.5 in example 6 to obtain a complete solution. The method in this example includes the following.

5a. After receiving the DCR, the UEs that want to establish the unicast links with UE1 (that is, the UEs that are interested in the sidelink service type indicated by the DCR, such as UE21 and UE22) send the second sidelink data to UE1 separately. The second sidelink information includes the second sidelink data and the target identifier and the source identifier that correspond to the second sidelink data, and the transmission resource of the second sidelink information is associated with the transmission resource of the first sidelink information.

The second sidelink data includes one of a response to the first sidelink data and a feedback to the first sidelink data.

For example, the transmission resource of the second sidelink information is associated with the transmission resource of the DCR (that is, the first sidelink data), and the transmission resource of the second sidelink information may be located within one time window or one time slot after the transmission resource of the DCR. The relationship between the time window or the time slot and the transmission resource of the DCR may be configured or preconfigured through the network, or may be predefined. The second sidelink data may be the direct link authentication request (that is, the response to the first sidelink data) or the signaling related to the direct link security establishment (that is, the response to the first sidelink data). Alternatively, the first sidelink data may be acknowledgement or non-acknowledgement information (such as ACK/NACK feedback information) (that is, the feedback to the first sidelink data), or other information. The information included in the second sidelink data is not limited in the present application. UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. This example corresponds to the case where the identification information for the beam training further includes the source identifier used by the initial signaling for establishing the unicast link (that is, the identifier of UE1 or the second identifier).

For another example, the transmission resource of the second sidelink information is associated with the transmission resource of the DCR, and the transmission resource of the second sidelink information may be located within the time window or the time slot after the transmission resource of the DCR. The relationship between the time window or the time slot and the transmission resource of the DCR may be configured or preconfigured through the network, or may be predefined. The second sidelink data may be the direct link authentication request (that is, the response to the first sidelink data) or the signaling related to the direct link security establishment (that is, the response to the first sidelink data). Alternatively, the first sidelink data may be the acknowledgement or non-acknowledgement information (such as the ACK/NACK feedback information) (that is, the feedback to the first sidelink data), or the other information. The information included in the second sidelink data is not limited in the present application. UE21 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. Similarly, UE22 configures the target identifier corresponding to the second sidelink data as the source identifier corresponding to the DCR, allocates the source identifier corresponding to the second sidelink data, and then transmits the target identifier and the source identifier that correspond to the second sidelink data to UE1 together with the second sidelink data. This example corresponds to the case where the identification information for the beam training further includes the identifier of UE1 for the beam training (that is, the third identifier).

In example 8, this example is illustrated using an example in which the first communication node is UE1, and the second communication node is UE2. In this example, the transmission resource of the first sidelink information is associated with the transmission resource of the beam report.

UE1 selects a transmitting beam for the first sidelink information based on the received beam report from UE2 and sends the first sidelink information on a resource associated with a transmission resource of the beam report corresponding to the selected transmitting beam.

For example, the resource associated with the transmission resource of the beam report may be located within one time window or one time slot after the transmission resource of the beam report. Assuming that the first sidelink data is the DCR, the used transmitting beam is RS1, and the transmission resource of the beam report corresponding to RS1 is resource 1, the transmission resource of the DCR may be located within one time window or one time slot after resource 1. In addition, optionally, the first sidelink information may further include a transmitting beam used when the first sidelink data is sent. The relationship between the time window or the time slot and the transmission resource of the DCR may be configured or preconfigured through the network, or may be predefined.

In example 9, this example is illustrated using an example in which the first communication node is UE1, and the second communication node is UE2. In this example, the transmission resource of the first sidelink information is associated with the used transmitting beam.

UE1 selects the transmitting beam for the first sidelink information based on the received beam report from UE2 and sends the first sidelink information on a resource associated with the transmitting beam.

For example, the resource associated with the transmitting beam may be located within a first time window or a first time slot associated with the transmitting beam after a transmission resource of the beam report indicating the transmitting beam. Assuming that the first sidelink data is the DCR, the used transmitting beam is RS1, and each RS1 is associated with one time window or one time slot, the transmission resource of the DCR is located within a first time window or a first time slot associated with RS1 after the transmission resource of the beam report. In addition, optionally, the first sidelink information may further include the transmitting beam used when the first sidelink data is sent.

In the present application, the transmitting beam for UE1 may be indicated by the index of the reference signal sent from UE1, or by a beam index, or by a time resource index corresponding to the reference signal. The relationship between the time window or the time slot and the transmission resource of the first sidelink information may be configured or preconfigured through the network, or may be predefined.

In example 10, in this example, the identification information includes the third identifier, or the identification information includes the at least one first identifier and the third identifier.

The first sidelink information includes the fifth beam report, the fifth beam report includes at least one of the third identifier of the first communication node, the third identifier of the at least one first other communication node, or the transmitting beam for the at least one first other communication node, and the first other communication node is the communication node other than the first communication node. For example, the first other communication node may be a transmitting node of the reference signal for the beam training measured by the first communication node. For example, the first communication node UE1 measures reference signals for the beam training sent from UE2 and UE3, and first other communication nodes in the fifth beam report sent from UE1 may be UE2 and UE3.

The first beam report further includes at least one of the third identifier of the first communication node or the third identifier of the second communication node.

The second sidelink information includes the second beam report, and the second beam report includes at least one of the second transmitting beam for the first communication node or the third identifier of the second communication node.

In this example, the first sidelink information may further include other information. For example, the first sidelink information further includes the DCR or any other sidelink information. The second sidelink information may further include other information. For example, the second sidelink information further includes a response to the DCR or any other sidelink information.

In another example, the identification information includes the second identifier, or the identification information includes the first identifier and the second identifier. In this case, the "third identifier" in example 10 may be replaced with the "second identifier", which is not repeated in this example.

For example, an illustration is made using an example in which the first communication node is UE1, and the second communication node is UE2.

UE1 sends both the reference signals for the beam training and the identification information for the beam training. UE2 performs the measurement based on the reference signals for the beam training sent from UE1 and sends the first beam report to UE1. The first beam report indicates the transmitting beam for UE1. For example, the third identifier of UE1 is ID3_1, UE1 has four beams corresponding to four reference signals RS11 to RS14, and the transmitting beam indicated by the first beam report for UE1 is RS11.

After receiving the first beam report, UE1 sends the first sidelink information, where the first sidelink information includes the fifth beam report. The fifth beam report includes the third identifier of UE1, a third identifier of UE2, and transmitting beam information of UE2.For example, UE1 measures reference signals for the beam training sent from other UEs, such as reference signals for the beam training sent from UE2 (UE2 has four beams corresponding to four reference signals RS21 to RS24), and acquires the third identifier of UE2 (for example, ID3_2). The fifth beam report includes the third identifier ID3_1 of UE1, the third identifier ID3_2 of UE2, and the transmitting beam information of UE2 (for example, RS21 and RS22).

After receiving the first sidelink information, UE2 sends the second sidelink information to UE1, and the second sidelink information includes the second beam report. The second beam report includes the third identifier of UE2 and, optionally, may further include the transmitting beam information of UE1. In an example, the transmitting beam information of UE1 included in the second beam report may include one or more transmitting beams for UE1, such as RS11 and RS12.

For another example, an illustration is made using an example in which the first communication node is UE1, and second communication nodes are UE2 and UE3 (that is, there are two second communication nodes).

UE1 sends both the reference signals for the beam training and the identification information for the beam training. UE2 performs the measurement based on the reference signals for the beam training sent from UE1 and sends the first beam report to UE1. The first beam report indicates the transmitting beam for UE1. UE3 also measures the reference signals for the beam training sent from UE1 and does not send the first beam report to UE1 yet.

After receiving the first beam report, UE1 sends the first sidelink information, where the first sidelink information includes the fifth beam report. The fifth beam report includes the third identifier of UE1, the third identifier of UE2, the transmitting beam information of UE2, a third identifier of UE3, and transmitting beam information of UE3. For example, UE1 measures reference signals for the beam training sent from other UEs, such as reference signals for the beam training sent from UE2 and UE3, and acquires the third identifier of UE2 and the third identifier of UE3.

After receiving the first sidelink information from UE1, UEs (such as UE2 and UE3) may send the second sidelink information to UE1, and the second sidelink information includes the second beam report. For example, UE2 sends the second sidelink information to UE1, and the second beam report includes the third identifier of UE2 and the transmitting beam information of UE; or the second beam report includes the third identifier of UE2.Similarly, UE3 sends the second sidelink information to UE1, and the second beam report includes the third identifier of UE3 and the transmitting beam information of UE1 (such as RS12 and RS13). Different UEs determine the transmitting beams for UE1 based on measurement results of the reference signals for the beam training sent from UE1. For example, the transmitting beam information of UE1 sent from UE2 is RS11 and RS12, and the transmitting beam information of UE1 sent from UE3 is RS13. In an example, if a UE receives the first sidelink information including a third identifier of the UE and transmitting beam information of the UE and has acquired a transmitting beam for a transmitting device of the first sidelink information, the UE sends the second sidelink information.

For another example, an illustration is made using an example in which the first communication node is UE1, and the second communication node is UE2.

UE1 sends both the reference signals for the beam training and the identification information for the beam training. UE2 performs the measurement based on the reference signals for the beam training sent from UE1 and sends the first beam report to UE1. The first beam report includes the third identifier of UE2, the third identifier of UE1, and the transmitting beams for UE1. For example, the first beam report may include the one or more transmitting beams for UE1.

After receiving the first beam report, UE1 sends the first sidelink information, where the first sidelink information includes the fifth beam report. The fifth beam report includes the third identifier of UE1, the third identifier of UE2, and the transmitting beam information of UE2.

After receiving the first sidelink information, UE2 sends the second sidelink information to UE1, and the second sidelink information includes the second beam report. The second beam report includes the third identifier of UE2 and the transmitting beam information of UE1; or the second beam report includes the third identifier of UE2.

For another example, an illustration is made using an example in which the first communication node is UE1, and second communication nodes are N UEs (that is, there are N second communication nodes), where N is a positive integer.

UE1 sends both the reference signals for the beam training and the identification information for the beam training. The N UEs perform measurements based on the reference signals for the beam training sent from UE1 and send first beam reports respectively.

After receiving a first beam report sent from at least one UE, UE1 sends the first sidelink information, where the first sidelink information includes the fifth beam report. The fifth beam report includes the third identifier of UE1, a third identifier of at least one other UE, and transmitting beam information of the at least one other UE. In an example, after receiving the first beam reports sent from the N UEs, UE1 sends the first sidelink information, where the first sidelink information includes the fifth beam report. The fifth beam report includes the third identifier of UE1, third identifiers of the N UEs, and transmitting beam information of the N UEs.

After receiving the first sidelink information, the N UEs send the second sidelink information to UE1 separately. For each UE among the N UEs, the second beam report includes a third identifier of each UE, and optionally, may further include the transmitting beams for UE1. In addition, for each UE among the N UEs, if the second beam report includes the transmitting beams for UE1, transmitting beams for UE1 included in the first beam report and the second beam report may be different. For example, for UE2, the transmitting beam for UE1 included in the first beam report is RS11, and the transmitting beams for UE1 included in the second beam report are RS11 and RS12.

For another example, an illustration is made using an example in which the first communication node is UE1, and the second communication node is UE2.

UE1 sends both the reference signals for the beam training and the identification information for the beam training. UE2 performs the measurement based on the reference signals for the beam training sent from UE1 and sends the first beam report to UE1. The first beam report indicates the transmitting beam for UE1. For example, the third identifier of UE1 is ID3_1, UE1 has the four beams corresponding to the four reference signals RS11 to RS14, and the transmitting beam indicated by the first beam report for UE1 is RS11.

After receiving the first beam report, UE1 sends the first sidelink information, where the first sidelink information includes the fifth beam report. The fifth beam report includes the third identifier of UE1.

After receiving the first sidelink information, UE2 sends the second sidelink information to UE1, and the second sidelink information includes the second beam report. The second beam report includes the third identifier of UE2 and the transmitting beam information of UE1.

For another example, the second communication node may also not send the first beam report, and an illustration is made using an example in which UE1 is a first device, and UE2 is a second device.

UE1 sends both the reference signals for the beam training and the identification information for the beam training. UE2 performs the measurement based on the reference signals for the beam training sent from UE1. For example, the third identifier of UE1 is ID3_1, and UE1 has the four beams corresponding to the four reference signals RS11 to RS14.

UE1 sends the first sidelink information, where the first sidelink information includes the fifth beam report. The fifth beam report includes the third identifier of UE1. For example, UE1 sends the reference signals and the identification information for the beam training, and after several cycles or several times, UE1 sends the first sidelink information the multiple times (or repeatedly) in the multiple beam directions, or sends the first sidelink information in the wide beam.

After receiving the first sidelink information, UE2 sends the second sidelink information to UE1, and the second sidelink information includes the second beam report. The second beam report includes the third identifier of UE2 and the transmitting beam information of UE1.

For another example, the second communication node may also not send the first beam report, and an illustration is made using an example in which UE1 is the first device, and UE2 is the second device.

UE1 sends both the reference signals for the beam training and the identification information for the beam training. UE2 performs the measurement based on the reference signals for the beam training sent from UE1. For example, the third identifier of UE1 is ID3_1, and UE1 has the four beams corresponding to the four reference signals RS11 to RS14.

UE1 sends the first sidelink information, where the first sidelink information includes the fifth beam report. The fifth beam report includes the third identifier of UE1, the third identifier of UE2, and a transmitting beam for UE2. For example, UE1 sends the reference signals and the identification information for the beam training, and after the several cycles or the several times, UE1 sends the first sidelink information the multiple times (or repeatedly) in the multiple beam directions, or sends the first sidelink information in the wide beam. Before sending the first sidelink information, UE1 also receives a reference signal and identification information for the beam training sent from UE2 and measures the reference signal for the beam training sent from UE2.

After receiving the first sidelink information, UE2 sends the second sidelink information to UE1, and the second sidelink information includes the second beam report. The second beam report includes the third identifier of UE2 and the transmitting beam information of UE1.

In example 11, in this example, the identification information includes the third identifier, or the identification information includes the at least one first identifier and the third identifier.

The third sidelink information includes the third beam report, the third beam report includes at least one of the third identifier of the second communication node, the third identifier of the at least one second other communication node, or the transmitting beam for the at least one second other communication node, and the second other communication node is the communication node other than the second communication node. For example, the second other communication node may be a transmitting node of a reference signal for the beam training measured by the second communication node. For example, the second communication node UE2 measures reference signals for the beam training sent from UE1 and UE3, and second other communication nodes in the third beam report sent from UE2 may be UE1 and UE3.

The fourth sidelink information includes the fourth beam report, and the fourth beam report includes at least one of the third identifier of the first communication node or the transmitting beam for the second communication node.

In this example, the third sidelink information may further include other information. For example, the third sidelink information further includes the DCR or any other sidelink information. The fourth sidelink information may further include other information. For example, the fourth sidelink information further includes the response to the DCR or any other sidelink information.

For example, an illustration is made using an example in which the first communication node is UE1, and the second communication node is UE2.

UE1 sends both the reference signals for the beam training and the identification information for the beam training.

After measuring the reference signals for the beam training sent from UE1, UE2 sends the third sidelink information, where the third sidelink information includes the third beam report. The third beam report includes the third identifier of UE2, the third identifier of UE1, and the transmitting beam information of UE1.

After receiving the third sidelink information, UE1 sends the fourth sidelink information to UE2. The fourth sidelink information includes the fourth beam report. The fourth beam report includes the third identifier of UE1 and, optionally, may further include the transmitting beam information of UE2. For example, UE1 determines whether the fourth beam report includes the transmitting beam information of UE2, or determines, based on whether UE1 has sent the transmitting beam information of UE2 to UE2, whether the fourth beam report includes the transmitting beam information of UE2.

For another example, an illustration is made using an example in which first communication nodes are UE11 and UE12 (that is, two first communication nodes), and the second communication node is UE2.

UE11 sends both a reference signal for the beam training and identification information for the beam training. Similarly, UE12 sends both a reference signal for the beam training and identification information for the beam training.

After measuring the reference signals for the beam training sent from UE11 and UE12, UE2 sends the third sidelink information, where the third sidelink information includes the third beam report. The third beam report includes the third identifier of UE2, a third identifier of UE11, transmitting beam information of UE11, a third identifier of UE12, and transmitting beam information of UE12.

After receiving the third sidelink information, UE11 and UE12 send the fourth sidelink information to UE2 separately. The fourth sidelink information includes the fourth beam report. For UE11, the fourth beam report includes the third identifier of UE11 and the transmitting beam information of UE2. For UE12, the fourth beam report includes the third identifier of UE12 and the transmitting beam information of UE2. For example, UE11 and UE12 measure reference signals for the beam training sent from UE2 (UE2 has the four beams corresponding to the four reference signals RS21 to RS24), and the transmitting beam information of UE2 sent from UE11 and UE12 depends on measurement results of UE11 and UE12. For example, UE11 includes a transmitting beam RS21 for UE2 in the fourth beam report, and UE12 includes a transmitting beam RS22 for UE2 in the fourth beam report.

In the present application, "if the target identifier corresponding to the first sidelink data is one of first identifiers included in the identification information for the beam training, and the cast type of the first sidelink data is broadcast" is equivalent to "the target identifier corresponding to the first sidelink data is the default target identifier used by the initial signaling for establishing the unicast link". That is, if the target identifier corresponding to the first sidelink data is the first identifier in the identification information for the beam training, but is not the default target identifier used by the initial signaling for establishing the unicast link, the cast type of the first sidelink data cannot be broadcast.

If not in collision, the preceding embodiments or examples and the features thereof may be combined with each other.

FIG. 10 is a diagram illustrating the structure of a beam training apparatus according to an embodiment. The apparatus may be configured in a first communication node. As shown in FIG. 10, the apparatus includes a sending module 10 and a receiving module 11.

The sending module 10 includes at least one of a first sending submodule, a second sending submodule, or a third sending submodule. The receiving module 11 includes at least one of a first receiving submodule, a second receiving submodule, or a third receiving submodule. The first sending submodule is configured to send a reference signal (RS) and identification information for beam training; the second sending submodule is configured to send first sidelink information; the third sending submodule is configured to send fourth sidelink information. The first receiving submodule is configured to receive a first beam report, where the first beam report is used for indicating a first transmitting beam for the first communication node; the second receiving submodule is configured to receive second sidelink information; the third receiving submodule is configured to receive third sidelink information. The identification information includes at least one of a first identifier, a second identifier, or a third identifier. The first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

The beam training apparatus provided in this embodiment may perform the beam training method in the preceding embodiments. The beam training apparatus provided in this embodiment has implementation principles and technical effects that are similar to those of the preceding embodiments, and the details are not repeated here.

In an embodiment, the identification information includes at least one first identifier and at least one second identifier, and the at least one first identifier has a correspondence with the at least one second identifier.

In an embodiment, the first sidelink information includes at least one of first sidelink data, a target identifier corresponding to first sidelink data, or a source identifier corresponding to first sidelink data; the target identifier corresponding to the first sidelink data and the source identifier corresponding to the first sidelink data are respectively a first identifier of the at least one first identifier and a second identifier of the at least one second identifier corresponding to the first identifier.

In an embodiment, the identification information includes at least one first identifier and the third identifier.

In an embodiment, the first sidelink information includes at least one of a third identifier of the first communication node, first sidelink data, a target identifier corresponding to first sidelink data, or a source identifier corresponding to first sidelink data; the target identifier corresponding to the first sidelink data is a first identifier of the at least one first identifier; the source identifier corresponding to the first sidelink data includes at least one of an identifier assigned by the first communication node, an identifier configured or pre-configured through a network, or a source identifier of a unicast link the same as the unicast link of the first communication node associated with the first identifier.

In an embodiment, the second sidelink information includes a second beam report, and the second beam report includes a second transmitting beam for the first communication node; or a transmission resource of the second sidelink information is associated with a transmission resource of the first sidelink information.

In an embodiment, a transmission resource of the first sidelink information is associated with at least one of a transmission resource of the first beam report or the RS.

In an embodiment, the identification information includes the third identifier.

In an embodiment, the first sidelink information includes a fifth beam report, the fifth beam report includes at least one of a third identifier of the first communication node, a third identifier of at least one first other communication node, or a transmitting beam for at least one first other communication node, and a first other communication node is a communication node other than the first communication node.

In an embodiment, the first beam report further includes at least one of the third identifier of the first communication node or a third identifier of a second communication node.

In an embodiment, the second sidelink information includes a second beam report, and the second beam report includes at least one of a second transmitting beam for the first communication node or a third identifier of a second communication node.

In an embodiment, the third sidelink information includes a third beam report, the third beam report includes at least one of a third identifier of a second communication node, a third identifier of at least one second other communication node, or a transmitting beam for at least one second other communication node, and a second other communication node is a communication node other than the second communication node.

In an embodiment, the fourth sidelink information includes a fourth beam report, and the fourth beam report includes at least one of a third identifier of the first communication node or a transmitting beam for the second communication node.

FIG. 11 is another diagram illustrating the structure of a beam training apparatus according to an embodiment. The apparatus may be configured in a second communication node. As shown in FIG. 11, the apparatus includes a receiving module 20 and a sending module 21.

The receiving module 20 includes at least one of a fourth receiving submodule, a fifth receiving submodule, or a sixth receiving submodule. The sending module 21 includes at least one of a fourth sending submodule, a fifth sending submodule, or a sixth sending submodule. The fourth receiving submodule is configured to receive a reference signal (RS) and identification information for beam training sent from a first communication node; the fifth receiving submodule is configured to receive first sidelink information; the sixth receiving submodule is configured to receive fourth sidelink information. The fourth sending submodule is configured to send a first beam report, where the first beam report is used for indicating a first transmitting beam for the first communication node; the fifth sending submodule is configured to send second sidelink information; the sixth sending submodule is configured to send third sidelink information. The identification information includes at least one of a first identifier, a second identifier, or a third identifier. The first identifier includes at least one of a default target identifier used by initial signaling for establishing a unicast link or an identifier of a peer communication device, the second identifier includes at least one of a source identifier used by the initial signaling for establishing the unicast link or a source identifier associated with a unicast link of the first communication node, and the third identifier is an identifier used for the beam training.

The beam training apparatus provided in this embodiment may perform the beam training method in the preceding embodiments. The beam training apparatus provided in this embodiment has implementation principles and technical effects that are similar to those of the preceding embodiments, and the details are not repeated here.

In an embodiment, the identification information includes at least one first identifier and at least one second identifier, and the at least one first identifier has a correspondence with the at least one second identifier.

In an embodiment, the first sidelink information includes at least one of first sidelink data, a target identifier corresponding to first sidelink data, or a source identifier corresponding to first sidelink data; the target identifier corresponding to the first sidelink data and the source identifier corresponding to the first sidelink data are respectively a first identifier of the at least one first identifier and a second identifier of the at least one second identifier corresponding to the first identifier.

In an embodiment, the identification information includes at least one first identifier and the third identifier.

In an embodiment, the first sidelink information includes at least one of a third identifier of the first communication node, first sidelink data, a target identifier corresponding to first sidelink data, or a source identifier corresponding to first sidelink data; the target identifier corresponding to the first sidelink data is a first identifier of the at least one first identifier; the source identifier corresponding to the first sidelink data includes at least one of an identifier assigned by the first communication node, an identifier configured or pre-configured through a network, or a source identifier of a unicast link the same as the unicast link of the first communication node associated with the first identifier.

In an embodiment, the second sidelink information includes a second beam report, and the second beam report includes a second transmitting beam for the first communication node; or a transmission resource of the second sidelink information is associated with a transmission resource of the first sidelink information.

In an embodiment, a transmission resource of the first sidelink information is associated with at least one of a transmission resource of the first beam report or the RS.

In an embodiment, the identification information includes the third identifier.

In an embodiment, the first sidelink information includes a fifth beam report, the fifth beam report includes at least one of a third identifier of the first communication node, a third identifier of at least one first other communication node, or a transmitting beam for at least one first other communication node, and a first other communication node is a communication node other than the first communication node.

In an embodiment, the first beam report further includes at least one of the third identifier of the first communication node or a third identifier of the second communication node.

In an embodiment, the second sidelink information includes a second beam report, and the second beam report includes at least one of a second transmitting beam for the first communication node or a third identifier of the second communication node.

In an embodiment, the third sidelink information includes a third beam report, the third beam report includes at least one of a third identifier of the second communication node, a third identifier of at least one second other communication node, or a transmitting beam for at least one second other communication node, and a second other communication node is a communication node other than the second communication node.

In an embodiment, the fourth sidelink information includes a fourth beam report, and the fourth beam report includes at least one of a third identifier of the first communication node or a transmitting beam for the second communication node.

An embodiment of the present application further provides a communication node. The communication node includes a processor configured to perform the method provided in any embodiment of the present application when executing a computer program. Specifically, the communication node may be a transmitting UE or a receiving UE provided in any embodiment of the present application, which is not specifically limited in the present application.

Exemplarily, the following embodiment provides a diagram illustrating the structure of a UE as a communication node.

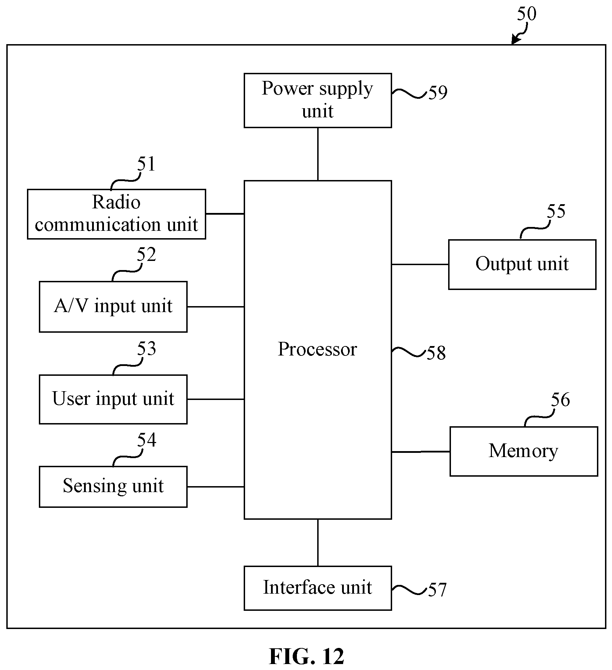

FIG. 12 is a diagram illustrating the structure of a UE according to an embodiment. The UE may be implemented in multiple forms. The UE in the present application may include, but is not limited to, a mobile terminal device such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal or a vehicle-mounted electronic rearview mirror; or a fixed terminal device such as a digital television (TV) or a desktop computer.

As shown in FIG. 12, the UE50 may include a wireless communication unit 51, an audio/video (A/V) input unit 52, a user input unit 53, a sensing unit 54, an output unit 55, a memory 56, an interface unit 57, a processor 58, and a power supply unit 59. FIG. 12 illustrates the UE including multiple components; but it is to be understood that not all illustrated components are required to be implemented. More or fewer components may be implemented instead.

In this embodiment, the wireless communication unit 51 allows wireless communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to perform the method provided in the embodiments of the present application.

An embodiment of the present application further provides a computer-readable storage medium. The computer-readable storage medium stores a computer program that, when executed by a processor, causes the processor to perform the method provided in any embodiment of the present application.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list): an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any appropriate medium including, but not limited to, a radio medium, a wire, an optical cable, radio frequency (RF), and the like, or any appropriate combination thereof.

Computer program codes for executing the operations of the present application may be written in one or more programming languages or a combination of multiple programming languages. The programming languages include object-oriented programming languages (such as Java, Smalltalk, C++, Ruby, and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented by using any appropriate data storage technology, such as, but not limited to, a read-only memory (ROM), a random-access memory (RAM), an optical memory device and system (for example, a digital video disc (DVD) or a compact disk (CD)). Computer-readable media may include non-transitory storage media. The data processor may be of any type suitable for the local technical environment, such as, but is not limited to, a general purpose computer, a special purpose computer, a microprocessor, a digital signal processor (DSP), an application specific integrated circuit (ASIC), a field-programmable gate array (FPGA), and a processor based on a multi-core processor architecture.

## Claims

1. A beam training method, applied by a first communication node, comprising:
sending a reference signal (RS) and identification information for beam training, wherein the identification information comprises at least one of a first identifier, a second identifier, or a third identifier; the first identifier comprises at least one of a default target identifier used by initial signaling for establishing a unicast link or an identifier of a peer communication device, the second identifier comprises at least one of a source identifier used by the initial signaling for establishing the unicast link or a source identifier associated with a unicast link of the first communication node, and the third identifier is an identifier used for the beam training; and
receiving a first beam report, sending first sidelink information, and receiving second sidelink information, wherein the first beam report is used for indicating a first transmitting beam for the first communication node; or receiving third sidelink information and sending fourth sidelink information.

2. The beam training method of claim 1, wherein the identification information comprises at least one first identifier and at least one second identifier, and the at least one first identifier has a correspondence with the at least one second identifier.

3. The beam training method of claim 2, wherein the first sidelink information comprises at least one of first sidelink data, a target identifier corresponding to first sidelink data, or a source identifier corresponding to first sidelink data; and
the target identifier corresponding to the first sidelink data and the source identifier corresponding to the first sidelink data are respectively a first identifier of the at least one first identifier and a second identifier of the at least one second identifier corresponding to the first identifier.

4. The beam training method of claim 1, wherein the identification information comprises at least one first identifier and the third identifier.

5. The beam training method of claim 4, wherein the first sidelink information comprises at least one of a third identifier of the first communication node, first sidelink data, a target identifier corresponding to first sidelink data, or a source identifier corresponding to first sidelink data; and
the target identifier corresponding to the first sidelink data is a first identifier of the at least one first identifier; the source identifier corresponding to the first sidelink data comprises at least one of an identifier assigned by the first communication node, an identifier configured or pre-configured through a network, or a source identifier of a unicast link same as the unicast link of the first communication node associated with the first identifier.

6. The beam training method of claim 1, wherein the second sidelink information comprises a second beam report, and the second beam report comprises a second transmitting beam for the first communication node; or
a transmission resource of the second sidelink information is associated with a transmission resource of the first sidelink information.

7. The beam training method of claim 1, wherein a transmission resource of the first sidelink information is associated with at least one of a transmission resource of the first beam report or the RS.

8. The beam training method of claim 1, wherein the identification information comprises the third identifier.

9. The beam training method of claim 4 or 8, wherein the first sidelink information comprises a fifth beam report, the fifth beam report comprises at least one of a third identifier of the first communication node, a third identifier of at least one first other communication node, or a transmitting beam for at least one first other communication node, and a first other communication node of the at least one first other communication node is a communication node other than the first communication node.

10. The beam training method of claim 9, wherein the first beam report further comprises at least one of the third identifier of the first communication node or a third identifier of a second communication node.

11. The beam training method of claim 9, wherein the second sidelink information comprises a second beam report, and the second beam report comprises at least one of a second transmitting beam for the first communication node or a third identifier of a second communication node.

12. The beam training method of claim 1, wherein the third sidelink information comprises a third beam report, the third beam report comprises at least one of a third identifier of a second communication node, a third identifier of at least one second other communication node, or a transmitting beam for at least one second other communication node, and a second other communication node of the at least one second other communication node is a communication node other than the second communication node.

13. The beam training method of claim 12, wherein the fourth sidelink information comprises a fourth beam report, and the fourth beam report comprises at least one of a third identifier of the first communication node or a transmitting beam for the second communication node.

14. A beam training method, applied by a second communication node, comprising:
receiving a reference signal (RS) and identification information for beam training that are sent from a first communication node, wherein the identification information comprises at least one of a first identifier, a second identifier, or a third identifier; the first identifier comprises at least one of a default target identifier used by initial signaling for establishing a unicast link or an identifier of a peer communication device, the second identifier comprises at least one of a source identifier used by the initial signaling for establishing the unicast link or a source identifier associated with a unicast link of the first communication node, and the third identifier is an identifier used for the beam training; and
sending a first beam report, receiving first sidelink information, and sending second sidelink information, wherein the first beam report is used for indicating a first transmitting beam for the first communication node; or sending third sidelink information and receiving fourth sidelink information.

15. A communication node comprising a processor, wherein the processor is configured to perform the beam training method of any one of claims 1 to 13 or claim 14 when executing a computer program.

16. A computer-readable storage medium storing a computer program that, when executed by a processor, is configured to cause the processor to perform the beam training method of any one of claims 1 to 13 or claim 14.
